# EUROPEAN PATENT SPECIFICATION

(11) **EP 1 419 182 B1**
(45) Date of publication and mention of the grant of the patent: **15.10.2008**
(21) Application number: 02766073.7
(22) Date of filing: 23.08.2002
(51) Int. Cl.: C08F 4/70, C08F 136/06, B01J 31/18

(54) **IRON-BASED CATALYST COMPOSITION FOR THE MANUFACTURE OF SYNDIOTACTIC 1,2-POLYBUTADIENE**
EISENHALTIGES KATALYSATORSYSTEM FÜR DIE HERSTELLUNG VON SYNDIOTAKTISCHEM 1,2-POLYBUTADIEN
COMPOSITION CATALYTIQUE A BASE DE FER DESTINEE A LA PRODUCTION DE 1,2-POLYBUTADIENE SYNDIOTACTIQUE

(30) Priority: 24.08.2001 US 938788; 12.10.2001 US 976069
(43) Date of publication of application: 19.05.2004
(73) Proprietor: Bridgestone Corporation, Tokyo 104 (JP)
(72) Inventor: LUO, Steven, Akron, OH 44313 (US); ZAK, David, Akron, OH 44310 (US)
(74) Representative: Albrecht, Thomas
(86) International application number: PCT/US2002/026886
(87) International publication number: WO 2003/018644

(56) References cited:
- EP-A- 0 994 128
- US-B1- 6 197 888
- C.M. MIKULSKI, N. HARRIS, P. SANFORD, F.J. IACONIANNI, L.P.PYTLEWSKI, N.M. KARAYANNIS: "Characterization of Polymeric Metal Complexes Formed by Reaction of Excess Diethyl Acetyl- or Diethyl Benzoyl-Phosphonate with Metal Chlorides at Elevated Temperatures " J. INORG. NUCL. CHEM. , vol. 43, no. 11, - 1981 pages 2753-2757, XP001121738
- C. M. MIKULSKI, W. HENRY, L. L. PYTLEWSKI, N. N. KARAYANNIS: "Diethyl Acetylphosphonate Complexes with 3d Metal Perchlorates" J. INORG. NUCL. CHEM. , vol. 40, - 1978 pages 769-772, XP009003019
- N. I. TYRYSHKIN, A. V. FUZSHENOKOVA, A.N. VEDERNUKOV, B.N. SOLOMONOV: "(1-Acetoxyvinyl)Phosphonates: Facile Synthesis via Catalytic Acylation of Dialkyl Phosphites " HETEROATOM CHEMISTRY, vol. 3, no. 2, - 1992 pages 127-131, XP009002997

## Description

### FIELD OF THE INVENTION

The present invention generally relates to a catalyst system that is formed by combining an iron-containing compound, an α-acylphosphonate diester, and an organoaluminum compound.

### BACKGROUND OF THE INVENTION

Syndiotactic 1,2-polybutadiene is a crystalline thermoplastic resin that has a stereoregular structure in which the side-chain vinyl groups are located alternately on the opposite sides in relation to the polymeric main chain. Syndiotactic 1,2-polybutadiene is a unique material that exhibits the properties of both plastics and rubber, and therefore it has many uses. For example, films, fibers, and various molded articles can be made from syndiotactic 1,2-polybutadiene. It can also be blended into and co-cured with natural or synthetic rubbers in order to improve the properties thereof.

Generally, syndiotactic 1,2-polybutadiene has a melting temperature from 80°C to 215°C, depending on the 1,2-linkage content and syndiotacticity. The physical properties and processing characteristics of syndiotactic 1,2-polybutadiene are affected by its melting temperature. Syndiotactic 1,2-polybutadiene having a relatively high melting temperature is generally characterized by having better mechanical properties but is more difficult to process due to the high temperature required to melt the polymer. On the other hand, syndiotactic 1,2-polybutadiene having a relatively low melting temperature is easier to process and can be readily mixed with elastomers, especially during mechanical mixing. For processability reasons, it is desirable for syndiotactic 1,2-polybutadiene to have a melting temperature of less than 190°C. Syndiotactic 1,2-polybutadiene having an intermediate melting temperature, e.g., from 120°C to 165°C, is particularly suitable for tire applications, since it can be easily mixed with rubbery elastomers under mild conditions and yet still possess sufficient crystallinity. Accordingly, there is a need for means to regulate the melting temperature of syndiotactic 1,2-polybutadiene.

Various transition metal catalyst systems based on cobalt, titanium, vanadium, chromium, and molybdenum for the preparation of syndiotactic 1,2-polybutadiene have been reported. The majority of these catalyst systems, however, have no practical utility because they have low catalytic activity or poor stereoselectivity, and in some cases they produce low molecular weight polymers or partially crosslinked polymers unsuitable for commercial use.

Two cobalt-based catalyst systems are known for preparing syndiotactic 1,2-polybutadiene. The first comprises a cobalt compound, a phosphine compound, an organoaluminum compound, and water. This catalyst system yields syndiotactic 1,2-polybutadiene having very low crystallinity. Also, this catalyst system develops sufficient catalytic activity only when halogenated hydrocarbon solvents are used as the polymerization medium, and halogenated solvents present toxicity problems.

The second catalyst system comprises a cobalt compound, an organoaluminum compound, and carbon disulfide. Because carbon disulfide has a low flash point, obnoxious smell, high volatility, and toxicity, it is difficult and dangerous to use and requires expensive safety measures to prevent even minimal amounts escaping into the atmosphere. Furthermore, the syndiotactic 1,2-polybutadiene produced with this cobalt catalyst system has a melting temperature of about 200-210 °C, which makes it difficult to process. Although the melting temperature of the syndiotactic 1,2-polybutadiene produced with this cobalt catalyst system can be reduced by employing a catalyst modifier, the use of this catalyst modifier has adverse effects on the catalyst activity and polymer yields.

Coordination catalyst systems based on iron-containing compounds, such as the combination of iron(III) acetylacetonate and triethylaluminum, are known. But, they have very low catalytic activity and poor stereoselectivity for polymerizing conjugated dienes. The product mixture often contains oligomers, low molecular weight liquid polymers, or partially crosslinked polymers. Therefore, these iron-based catalyst systems have no industrial utility.

Because syndiotactic 1,2-polybutadiene is a useful product and the catalysts known heretofore in the art have many shortcomings, it would be advantageous to develop a new and significantly improved catalyst composition that has high catalytic activity and stereoselectivity for polymerizing 1,3-butadiene into syndiotactic 1,2-polybutadiene.

### SUMMARY OF THE INVENTION

In general the present invention provides a catalyst composition that is the combination of or the reaction product of ingredients comprising (a) an iron-containing compound, (b) an α-acylphosphonate diester, and (c) an organoaluminum compound.

The present invention further includes a process for forming conjugated diene polymers comprising the step of polymerizing conjugated diene monomers in the presence of a catalytically effective amount of a catalyst composition formed by combining (a) an iron-containing compounds, (b) an α-acylphosphonate diester, and (c) an organoaluminum compound.

Advantageously, the catalyst composition of the present invention has very high catalytic activity and stereoselectivity for polymerizing conjugated diene monomers. This activity and selectivity, among other advantages, allows conjugated diene polymers such as syndiotactic 1,2-polybutadiene to be produced in high yields with low catalyst levels after relatively short polymerization times. Significantly, this catalyst composition is very versatile. By using a blend of two or more sterically distinct organoaluminum compounds, it is possible to control the characteristics of the resulting conjugated diene polymers without the need for a catalyst modifier that may have adverse effects on the catalyst activity and polymer yields. For example, it is possible to produce crystalline conjugated diene polymers, such as syndiotactic 1,2-polybutadiene, with a wide range of melting temperatures and molecular weights, thus eliminating the need to add a melting temperature regulator or a molecular weight regulator. In addition, the performance characteristics of the catalyst composition can be further manipulated by changing the stearic and electronic character of the organic substituents of the α-acylphosphonate diester. Further, the iron-containing compounds that are utilized in the catalyst composition of this invention are generally stable, inexpensive, relatively innocuous, and readily available. Furthermore, the catalyst composition of this invention has high catalytic activity in a wide variety of solvents including the environmentally-preferred nonhalogenated solvents such as aliphatic and cycloaliphatic hydrocarbons. Still further, this catalyst composition does not contain carbon disulfide. Therefore, the toxicity, objectionable smell, dangers, and expense associated with the use of carbon disulfide are eliminated.

And, certain embodiments of this invention provide highly active catalyst compositions that allow conjugated diene oligomers to be produced at very high yields with low catalyst levels after relatively short oligomerization times. In fact, since the catalyst compositions of these embodiments are active even at low temperatures, the oligomerization of conjugated dienes can be conducted under very mild temperature conditions, which avoids thermal polymerization and/or cracking or other deleterious effects. Also, the catalyst compositions of these embodiments are very selective, and thereby 1,3-butadiene can be converted quantitatively to acyclic dimers.

### DETAILED DESCRIPTION OF ILLUSTRATIVE EMBODIMENTS

The catalyst composition of the present invention is formed by combining (a) an iron-containing compound, (b) an α-acylphosphonate diester, and (c) an organoaluminum compound. In addition to the three catalyst ingredients (a), (b), and (c), other organometallic compounds or Lewis bases can also be added, if desired.

Various iron-containing compounds or mixtures thereof can be employed as ingredient (a) of the catalyst composition. Preferably, these iron-containing compounds are soluble in hydrocarbon solvents such as aromatic hydrocarbons, aliphatic hydrocarbons, or cycloaliphatic hydrocarbons. Hydrocarbon-insoluble iron-containing compounds, however, can be suspended in the polymerization medium to form the catalytically active species and are also useful.

The iron atom in the iron-containing compounds can be in various oxidation states including but not limited to the 0, +2, +3, and +4 oxidation states. Divalent iron compounds (also called ferrous compounds), wherein the iron atom is in the +2 oxidation state, and trivalent iron compounds (also called ferric compounds), wherein the iron atom is in the +3 oxidation state, are preferred. Suitable iron-containing compounds include, iron carboxylates, iron organophosphates, iron organophosphonates, iron organophosphinates, iron carbamates, iron dithiocarbamates, iron xanthates, iron α-diketonates, iron alkoxides or aryloxides, and organoiron compounds.

Suitable iron carboxylates include iron (II) formate, iron (III) formate, iron(II) acetate, iron(III) acetate, iron(II) acrylate, iron(III) acrylate, iron(II) methacrylate, iron(III) methacrylate, iron(II) valerate, iron(III) valerate, iron(II) gluconate, iron(III) gluconate, iron(II) citrate, iron(III) citrate, iron(II) fumarate, iron(III) fumarate, iron(II) lactate, iron(III) lactate, iron(II) maleate, iron(III) maleate, iron(II) oxalate, iron (III) oxalate, iron(II) 2-ethylhexanoate, iron(III) 2-ethylhexanoate, iron(II) neodecanoate, iron(III) neodecanoate, iron(II) naphthenate, iron(III) naphthenate, iron(II) stearate, iron(III) stearate, iron(II) oleate, iron(III) oleate, iron(II) benzoate, iron(III) benzoate, iron(II) picolinate, and iron(III) picolinate.

Suitable iron organophosphates include iron(II) dibutyl phosphate, iron(III) dibutyl phosphate, iron(II) dipentyl phosphate, iron(III) dipentyl phosphate, iron(II) dihexyl phosphate, iron(III) dihexyl phosphate, iron(II) diheptyl phosphate, iron(III) diheptyl phosphate, iron(II) dioctyl phosphate, iron(III) dioctyl phosphate, iron(II) bis(1-methylheptyl) phosphate, iron(III) bis(1-methylheptyl) phosphate, iron(II) bis(2-ethylhexyl) phosphate, iron(III) bis(2-ethylhexyl) phosphate, iron(II) didecyl phosphate, iron(III) didecyl phosphate, iron(II) didodecyl phosphate, iron(III) didodecyl phosphate, iron(II) dioctadecyl phosphate, iron(III) dioctadecyl phosphate, iron(II) dioleyl phosphate, iron(III) dioleyl phosphate, iron(II) diphenyl phosphate, iron(III) diphenyl phosphate, iron(II) bis(p-nonylphenyl) phosphate, iron(III) bis(p-nonylphenyl) phosphate, iron(II) butyl (2-ethylhexyl) phosphate, iron(III) butyl (2-ethylhexyl) phosphate, iron(II) (1-methylheptyl) (2-ethylhexyl) phosphate, iron(III) (1-methylheptyl) (2-ethylhexyl) phosphate, iron(II) (2-ethylhexyl) (p-nonylphenyl) phosphate, and iron(III) (2-ethylhexyl) (p-nonylphenyl) phosphate.

Suitable iron organophosphonates include iron(II) butyl phosphonate, iron(III) butyl phosphonate, iron(II) pentyl phosphonate, iron(III) pentyl phosphonate, iron(II) hexyl phosphonate, iron(III) hexyl phosphonate, iron(II) heptyl phosphonate, iron(III) heptyl phosphonate, iron(II) octyl phosphonate, iron(III) octyl phosphonate, iron(II) (1-methylheptyl) phosphonate, iron(III) (1-methylheptyl) phosphonate, iron(II) (2-ethylhexyl) phosphonate, iron(III) (2-ethylhexyl) phosphonate, iron(II) decyl phosphonate, iron(III) decyl phosphonate, iron(II) dodecyl phosphonate, iron(III) dodecyl phosphonate, iron(II) octadecyl phosphonate, iron(III) octadecyl phosphonate, iron(II) oleyl phosphonate, iron(III) oleyl phosphonate, iron(II) phenyl phosphonate, iron(III) phenyl phosphonate, iron(II) (p-nonylphenyl) phosphonate, iron(III) (p-nonylphenyl) phosphonate, iron(II) butyl butylphosphonate, iron(III) butyl butylphosphonate, iron(II) pentyl pentylphosphonate, iron(II) pentyl pentylphosphonate, iron(II) hexyl hexylphosphonate, iron(III) hexyl hexylphosphonate, iron(II) heptyl heptylphosphonate, iron(III) heptyl heptylphosphonate, iron(II) octyl octylphosphonate, iron(III) octyl octylphosphonate, iron(II) (1-methylheptyl) (1-methylheptyl)phosphonate, iron(III) (1-methylheptyl) (1-methylheptyl)phosphonate, iron(II) (2-ethylhexyl) (2-ethylhexyl)phosphonate, iron(III) (2-ethylhexyl) (2-ethylhexyl)phosphonate, iron(II) decyl decylphosphonate, iron(III) decyl decylphosphonate, iron(II) dodecyl dodecylphosphonate, iron(III) dodecyl dodecylphosphonate, iron(II) octadecyl octadecylphosphonate, iron(III) octadecyl octadecylphosphonate, iron(II) oleyl oleylphosphonate, iron(III) oleyl oleylphosphonate, iron(II) phenyl phenylphosphonate, iron(III) phenyl phenylphosphonate, iron(II) (p-nonylphenyl) (p-nonylphenyl)phosphonate, iron(III) (p-nonylphenyl) (p-nonylphenyl)phosphonate, iron(II) butyl (2-ethylhexyl)phosphonate, iron(III) butyl (2-ethylhexyl)phosphonate, iron(II) (2-ethylhexyl) butylphosphonate, iron(III) (2-ethylhexyl) butylphosphonate, iron(II) (1-methylheptyl) (2-ethylhexyl)phosphonate, iron(III) (1-methylheptyl) (2-ethylhexyl)phosphonate, iron(II) (2-ethylhexyl) (1-methylheptyl)phosphonate, iron(III) (2-ethylhexyl) (1-methylheptyl)phosphonate, iron(II) (2-ethylhexyl) (p-nonylphenyl)phosphonate, iron(III) (2-ethylhexyl) (p-nonylphenyl)phosphonate, iron(II) (p-nonylphenyl) (2-ethylhexyl)phosphonate, and iron(III) (p-nonylphenyl) (2-ethylhexyl)phosphonate.

Suitable iron organophosphinates include iron(II) butylphosphinate, iron(III) butylphosphinate, iron(II) pentylphosphinate, iron(III) pentylphosphinate, iron(II) hexylphosphinate, iron(III) hexylphosphinate, iron(II) heptylphosphinate, iron(III) heptylphosphinate, iron(II) octylphosphinate, iron(III) octylphosphinate, iron(II) (1-methylheptyl)phosphinate, iron(III) (1-methylheptyl)phosphinate, iron(II) (2-ethylhexyl)phosphinate, iron(III) (2-ethylhexyl)phosphinate, iron(II) decylphosphinate, iron(III) decylphosphinate, iron(II) dodecylphosphinate, iron(III) dodecylphosphinate, iron(II) octadecylphosphinate, iron(III) octadecylphosphinate, iron(II) oleylphosphinate, iron(III) oleylphosphinate, iron(II) phenylphosphinate, iron(III) phenylphosphinate, iron(II) (p-nonylphenyl)phosphinate, iron(III) (p-nonylphenyl)phosphinate, iron(II) dibutylphosphinate, iron(III) dibutylphosphinate, iron(II) dipentylphosphinate, iron(III) dipentylphosphinate, iron(II) dihexylphosphinate, iron(III) dihexylphosphinate, iron(II) diheptylphosphinate, iron(III) diheptylphosphinate, iron(II) dioctylphosphinate, iron(III) dioctylphosphinate, iron(II) bis(1-methylheptyl)phosphinate, iron(III) bis(1-methylheptyl)phosphinate, iron(II) bis(2-ethylhexyl)phosphinate, iron(III) bis(2-ethylhexyl)phosphinate, iron(II) didecylphosphinate, iron(III) didecylphosphinate, iron(II) didodecylphosphinate, iron(III) didodecylphosphinate, iron(II) dioctadecylphosphinate, iron(III) dioctadecylphosphinate, iron(II) dioleylphosphinate, iron(III) dioleylphosphinate, iron(II) diphenylphosphinate, iron(III) diphenylphosphinate, iron(II) bis(p-nonylphenyl)phosphinate, iron(III) bis(p-nonylphenyl)phosphinate, iron(II) butyl(2-ethylhexyl)phosphinate, iron(III) butyl(2-ethylhexyl)phosphinate, iron(II) (1-methylheptyl) (2-ethylhexyl)phosphinate, iron(III) (1-methylheptyl) (2-ethylhexyl)phosphinate, iron(II) (2-ethylhexyl)(p-nonylphenyl)phosphinate, and iron(III) (2-ethylhexyl)(p-nonylphenyl)phosphinate.

Suitable iron carbamates include iron(II) dimethylcarbamate, iron(III) dimethylcarbamate, iron(II) diethylcarbamate, iron(III) diethylcarbamate, iron(II) diisopropylcarbamate, iron(III) diisopropylcarbamate, iron(II) dibutylcarbamate, iron(III) dibutylcarbamate, iron(II) dibenzylcarbamate, and iron(III) dibenzylcarbamate.

Suitable iron dithiocarbamates include iron(II) dimethyldithiocarbamate, iron(III) dimethyldithiocarbamate, iron(II) diethyldithiocarbamate, iron(III) diethyldithiocarbamate, iron(II) diisopropyldithiocarbamate, iron(III) diisopropyldithiocarbamate, iron(II) dibutyldithiocarbamate, iron(III) dibutyldithiocarbamate, iron(II) dibenzyldithiocarbamate, and iron(III) dibenzyldithiocarbamate.

Suitable iron xanthates include iron(II) methylxanthate, iron(III) methylxanthate, iron(II) ethylxanthate, iron(III) ethylxanthate, iron(II) isopropylxanthate, iron(III) isopropylxanthate, iron(II) butylxanthate, iron(III) butylxanthate, iron(II) benzylxanthate, and iron(III) benzylxanthate.

Suitable iron α-diketonates include iron(II) acetylacetonate, iron(III) acetylacetonate, iron(II) trifluoroacetylacetonate, iron(III) trifluoroacetylacetonate, iron(II) hexafluoroacetylacetonate, iron(III) hexafluoroacetylacetonate, iron(II) benzoylacetonate, iron(III) benzoylacetonate, iron(II) 2,2,6,6-tetramethyl-3,5-heptanedionate, and iron(III) 2,2,6,6-tetramethyl-3,5-heptanedionate.

Suitable iron alkoxides or aryloxides include iron(II) methoxide, iron(III) methoxide, iron(II) ethoxide, iron(III) ethoxide, iron(II) isopropoxide, iron(III) isopropoxide, iron(II) 2-ethylhexoxide, iron(III) 2-ethylhexoxide, iron(II) phenoxide, iron(III) phenoxide, iron(II) nonylphenoxide, iron(III) nonylphenoxide, iron(II) naphthoxide, and iron(III) naphthoxide.

The term "organoiron compound" refers to any iron compound containing at least one iron-carbon bond. Suitable organoiron compounds include bis(cyclopentadienyl)iron(II) (also called ferrocene), bis(pentamethylcyclopentadienyl)iron(II) (also called decamethylferrocene), bis(pentadienyl)iron(II), bis(2,4-dimethylpentadienyl)iron(II), bis(allyl)dicarbonyliron(II), (cyclopentadienyl) (pentadienyl)iron(II), tetra(1-norbornyl)iron(IV), (trimethylenemethane)tricarbonyliron(II), bis(butadiene)carbonyliron(0), (butadiene)tricarbonyliron(0), and bis(cyclooctatetraene)iron(0).

In one embodiment, ingredient (a) is a halogen-containing iron compound. When properly employed, the use of a halogen-containing iron compound will produce a catalyst system that is useful for making oligomers in lieu of polymers. Various halogen-containing iron compounds or mixtures thereof can be employed. The iron atom in the halogen-containing iron compounds can be in various oxidation states including, the +2, +3, and +4 oxidation states. Divalent iron compounds (also called ferrous compounds), where the iron atom is in the +2 oxidation state, and trivalent iron compounds (also called ferric compounds), where the iron atom is in the +3 oxidation state, are preferred.

Suitable halogen-containing iron compounds that can be utilized include, iron fluorides, iron chlorides, iron bromides, iron iodides, iron oxyhalides, and mixtures thereof. Specific examples of halogen-containing iron compounds include iron(II) fluoride, iron(III) fluoride, iron(III) oxyfluoride, iron(II) chloride, iron(III) chloride, iron(III) oxychloride, iron(II) bromide, iron(III) bromide, iron (III) oxybromide, and iron(II) iodide.

In a similar embodiment, the catalyst system of the present invention can be modified to be useful for making oligomers in lieu of polymers by employing an iron-containing compound and a halogen-containing compound. Useful iron-containing compounds are disclosed above. Useful halogen-containing compounds include various compounds or mixtures thereof that contain one or more labile halogen atoms. Examples of these halogen atoms include, but are not limited to, fluorine, chlorine, bromine, and iodine. A combination of two or more of these halogen atoms can also be utilized. Halogen-containing compounds that are soluble in a hydrocarbon solvent are preferred. Hydrocarbon-insoluble halogen-containing compounds, however, can be suspended in the oligomerization medium to form the catalytically active species, and are therefore useful.

Suitable halogen-containing compounds include, elemental halogens, mixed halogens, hydrogen halides, organic halides, inorganic halides, metallic halides, organometallic halides, and mixtures thereof. The preferred halogen-containing compounds are hydrogen halides, metallic halides, and organometallic halides, all of which contain at least one labile halogen atom.

Suitable elemental halogens include fluorine, chlorine, bromine, and iodine. Some specific examples of suitable mixed halogens include iodine monochloride, iodine monobromide, iodine trichloride, and iodine pentafluoride.

Suitable hydrogen halides include hydrogen fluoride, hydrogen chloride, hydrogen bromide, and hydrogen iodide.

Suitable organic halides include t-butyl chloride, t-butyl bromides, allyl chloride, allyl bromide, benzyl chloride, benzyl bromide, chloro-di-phenylmethane, bromo-di-phenylmethane, triphenylmethyl chloride, triphenylmethyl bromide, benzylidene chloride, benzylidene bromide, methyltrichlorosilane, phenyltrichlorosilane, dimethyldichlorosilane, diphenyldichlorosilane, trimethylchlorosilane, benzoyl chloride, benzoyl bromide, propionyl chloride, propionyl bromide, methyl chloroformate, and methyl bromoformate.

Suitable inorganic halides include phosphorus trichloride, phosphorus tribromide, phosphorus pentachloride, phosphorus oxychloride, phosphorus oxybromide, boron trifluoride, boron trichloride, boron tribromide, silicon tetrafluoride, silicon tetrachloride, silicon tetrabromide, silicon tetraiodide, arsenic trichloride, arsenic tribromide, arsenic triiodide, selenium tetrachloride, selenium tetrabromide, tellurium tetrachloride, tellurium tetrabromide, and tellurium tetraiodide.

Suitable metallic halides include tin tetrachloride, tin tetrabromide, aluminum trichloride, aluminum tribromide, antimony trichloride, antimony pentachloride, antimony tribromide, aluminum triiodide, aluminum trifluoride, gallium trichloride, gallium tribromide, gallium triiodide, gallium trifluoride, indium trichloride, indium tribromide, indium triiodide, indium trifluoride, titanium tetrachloride, titanium tetrabromide, titanium tetraiodide, zinc dichloride, zinc dibromide, zinc diiodide, and zinc difluoride.

Suitable organometallic halides include dimethylaluminum chloride, diethylaluminum chloride, dimethylaluminum bromide, diethylaluminum bromide, dimethylaluminum fluoride, diethylaluminum fluoride, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride, isobutylaluminum sesquichloride, methylmagnesium chloride, methylmagnesium bromide, methylmagnesium iodide, ethylmagnesium chloride, ethylmagnesium bromide, butylimagnesium chloride, butylmagnesium bromide, phenylmagnesium chloride, phenylmagnesium bromide, benzylmagnesium chloride, trimethyltin chloride, trimethyltin bromide, triethyltin chloride, triethyltin bromide, di-*t*-butyltin dichloride, di-*t*-butyltin dibromide, dibutyltin dichloride, dibutyltin dibromide, tributyltin chloride, and tributyltin bromide.

Useful α-acylphosphonate diesters that can be employed as ingredient (b) of the catalyst composition include acyclic α-acylphosphonate diesters, cyclic α-acylphosphonate diesters, and mixtures thereof. Acyclic α-acylphosphonate diesters may be represented by the following structure: 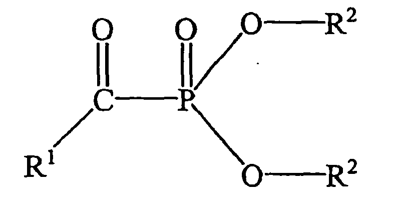 where R¹ is a hydrogen atom or a mono-valent organic group, and each R², which may be the same or different, is a mono-valent organic group. Preferably, R¹ and R² are hydrocarbyl groups such as, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 carbon atom, or the appropriate minimum number of carbon atoms to form the group, up to 20 carbon atoms. These hydrocarbyl groups may contain heteroatoms such as, but not limited to, nitrogen, oxygen, boron, silicon, sulfur, and phosphorus atoms.

α-Acylphosphonate diesters are known in the art and can be conveniently prepared by the Michaelis-Arbusov reactions of trihydrocarbyl phosphites with carboxylic acid halides or carboxylic acid anhydrides.

Suitable types of acyclic α-acylphosphonate diesters include, dihydrocarbyl formylphosphonates, dihydrocarbyl acetylphosphonates, dihydrocarbyl propionylphosphonates, dihydrocarbyl butyrylphosphonates, dihydrocarbyl isobutyrylphosphonates, dihydrocarbyl pivaloylphosphonates, dihydrocarbyl 2-ethylhexanoylphosphonates, dihydrocarbyl cyclohexanoylphosphonates, dihydrocarbyl acryloylphosphonates, dihydrocarbyl methacryloylphosphonates, dihydrocarbyl crotonylphosphonates, dihydrocarbyl benzoylphosphonates, dihydrocarbyl toluoylphosphonates, dihydrocarbyl anisoylphosphonates, and dihydrocarbyl naphthoylphosphonates. Mixtures of the above acyclic α-acylphosphonate diesters may also be utilized.

Suitable dihydrocarbyl formylphosphonates include dimethyl formylphosphonate, diethyl formylphosphonate, di-n-propyl formylphosphonate diisopropyl formylphosphonate, di-n-butyl formylphosphonate, diisobutyl formylphosphonate, di-t-butyl formylphosphonate, bis(2,2,2-trifluoroethyl) formylphosphonate, bis(2,4-dimethyl-3-pentyl) formylphosphonate, bis(2-ethylhexyl) formylphosphonate, dineopentyl formylphosphonate, bis(cyclohexylmethyl) formylphosphonate, dibenzyl formylphosphonate, dicyclobutyl formylphosphonate, dicyclopentyl formylphosphonate, dicyclohexyl formylphosphonate, diphenyl formylphosphonate, ditolyl formylphosphonate, dinaphthyl formylphosphonate, dially formylphosphonate, dimethallyl formylphosphonate, and dicrotyl formylphosphonate.

Suitable dihydrocarbyl acetylphosphonates include dimethyl acetylphosphonate, diethyl acetylphosphonate, di-n-propyl acetylphosphonate diisopropyl acetylphosphonate, di-n-butyl acetylphosphonate, diisobutyl acetylphosphonate, di-t-butyl acetylphosphonate, bis(2,2,2-trifluoroethyl) acetylphosphonate, bis(2,4-dimethyl-3-pentyl) acetylphosphonate, bis(2-ethylhexyl) acetylphosphonate, dineopentyl acetylphosphonate, bis(cyclohexylmethyl) acetylphosphonate, dibenzyl acetylphosphonate, dicyclobutyl acetylphosphonate, dicyclopentyl acetylphosphonate, dicyclohexyl acetylphosphonate, diphenyl acetylphosphonate, ditolyl acetylphosphonate, dinaphthyl acetylphosphonate, dially acetylphosphonate, dimethallyl acetylphosphonate, and dicrotyl acetylphosphonate.

Suitable dihydrocarbyl propionylphosphonates include dimethyl propionylphosphonate, diethyl propionylphosphonate, di-n-propyl propionylphosphonate diisopropyl propionylphosphonate, di-n-butyl propionylphosphonate, diisobutyl propionylphosphonate, di-t-butyl propionylphosphonate, bis(2,2,2-trifluoroethyl) propionylphosphonate, bis(2,4-dimethyl-3-pentyl) propionylphosphonate, bis(2-ethylhexyl) propionylphosphonate, dineopentyl propionylphosphonate, bis(cyclohexylmethyl) propionylphosphonate, dibenzyl propionylphosphonate, dicyclobutyl propionylphosphonate, dicyclopentyl propionylphosphonate, dicyclohexyl propionylphosphonate, diphenyl propionylphosphonate, ditolyl propionylphosphonate, dinaphthyl propionylphosphonate, dially propionylphosphonate, dimethallyl propionylphosphonate, and dicrotyl propionylphosphonate.

Suitable dihydrocarbyl butyrylphosphonates include dimethyl butyrylphosphonate, diethyl butyrylphosphonate, di-n-propyl butyrylphosphonate diisopropyl butyrylphosphonate, di-n-butyl butyrylphosphonate, diisobutyl butyrylphosphonate, di-t-butyl butyrylphosphonate, bis(2,2,2-trifluoroethyl) butyrylphosphonate, bis(2,4-dimethyl-3-pentyl) butyrylphosphonate, bis(2-ethylhexyl) butyrylphosphonate, dineopentyl butyrylphosphonate, bis (cyclohexylmethyl) butyrylphosphonate, dibenzyl butyrylphosphonate, dicyclobutyl butyrylphosphonate, dicyclopentyl butyrylphosphonate, dicyclohexyl butyrylphosphonate, diphenyl butyrylphosphonate, ditolyl butyrylphosphonate, dinaphthyl butyrylphosphonate, dially butyrylphosphonate, dimethallyl butyrylphosphonate, and dicrotyl butyrylphosphonate.

Suitable dihydrocarbyl isobutyrylphosphonates include dimethyl isobutyrylphosphonate, diethyl isobutyrylphosphonate, di-n-propyl isobutyrylphosphonate diisopropyl isobutyrylphosphonate, di-n-butyl isobutyrylphosphonate, diisobutyl isobutyrylphosphonate, di-t-butyl isobutyrylphosphonate, bis(2,2,2-trifluoroethyl) isobutyrylphosphonate, bis(2,4-dimethyl-3-pentyl) isobutyrylphosphonate, bis(2-ethylhexyl) isobutyrylphosphonate, dineopentyl isobutyrylphosphonate, bis(cyclohexylmethyl) isobutyrylphosphonate, dibenzyl isobutyrylphosphonate, dicyclobutyl isobutyrylphosphonate, dicyclopentyl isobutyrylphosphonate, dicyclohexyl isobutyrylphosphonate, diphenyl isobutyrylphosphonate, ditolyl isobutyrylphosphonate, dinaphthyl isobutyrylphosphonate, dially isobutyrylphosphonate, dimethallyl isobutyrylphosphonate, and dicrotyl isobutyrylphosphonate.

Suitable dihydrocarbyl pivaloylphosphonates include dimethyl pivaloylphosphonate, diethyl pivaloylphosphonate, di-n-propyl pivaloylphosphonate diisopropyl pivaloylphosphonate, di-n-butyl pivaloylphosphonate, diisobutyl pivaloylphosphonate, di-t-butyl pivaloylphosphonate, bis(2,2,2-trifluoroethyl) pivaloylphosphonate, bis(2,4-dimethyl-3-pentyl) pivaloylphosphonate, bis(2-ethylhexyl) pivaloylphosphonate, dineopentyl pivaloylphosphonate, bis(cyclohexylmethyl) pivaloylphosphonate, dibenzyl pivaloylphosphonate, dicyclobutyl pivaloylphosphonate, dicyclopentyl pivaloylphosphonate, dicyclohexyl pivaloylphosphonate, diphenyl pivaloylphosphonate, ditolyl pivaloylphosphonate, dinaphthyl pivaloylphosphonate, dially pivaloylphosphonate, dimethallyl pivaloylphosphonate, and dicrotyl pivaloylphosphonate.

Suitable dihydrocarbyl 2-ethylhexanoylphosphonates include dimethyl 2-ethylhexanoylphosphonate, diethyl 2-ethylhexanoylphosphonate, di-n-propyl 2-ethylhexanoylphosphonate diisopropyl 2-ethylhexanoylphosphonate, di-n-butyl 2-ethylhexanoylphosphonate, diisobutyl 2-ethylhexanoylphosphonate, di-t-butyl 2-ethylhexanoylphosphonate, bis(2,2,2-trifluoroethyl) 2-ethylhexanoylphosphonate, bis(2,4-dimethyl-3-pentyl) 2-ethylhexanoylphosphonate, bis(2-ethylhexyl) 2-ethylhexanoylphosphonate, dineopentyl 2-ethylhexanoylphosphonate, bis(cyclohexylmethyl) 2-ethylhexanoylphosphonate, dibenzyl 2-ethylhexanoylphosphonate, dicyclobutyl 2-ethylhexanoylphosphonate, dicyclopentyl 2-ethylhexanoylphosphonate, dicyclohexyl 2-ethylhexanoylphosphonate, diphenyl 2-ethylhexanoylphosphonate, ditolyl 2-ethylhexanoylphosphonate, dinaphthyl 2-ethylhexanoylphosphonate, dially 2-ethylhexanoylphosphonate, dimethallyl 2-ethylhexanoylphosphonate, and dicrotyl 2-ethylhexanoylphosphonate.

Suitable dihydrocarbyl cyclohexanoylphosphonates include dimethyl cyclohexanoylphosphonate, diethyl cyclohexanoylphosphonate, di-n-propyl cyclohexanoylphosphonate diisopropyl cyclohexanoylphosphonate, di-n-butyl cyclohexanoylphosphonate, diisobutyl cyclohexanoylphosphonate, di-t-butyl cyclohexanoylphosphonate, bis(2,2,2-trifluoroethyl) cyclohexanoylphosphonate, bis(2,4-dimethyl-3-pentyl) cyclohexanoylphosphonate, bis(2-ethylhexyl) cyclohexanoylphosphonate, dineopentyl cyclohexanoylphosphonate, bis(cyclohexylmethyl) cyclohexanoylphosphonate, dibenzyl cyclohexanoylphosphonate, dicyclobutyl cyclohexanoylphosphonate, dicyclopentyl cyclohexanoylphosphonate, dicyclohexyl cyclohexanoylphosphonate, diphenyl cyclohexanoylphosphonate, ditolyl cyclohexanoylphosphonate, dinaphthyl cyclohexanoylphosphonate, dially cyclohexanoylphosphonate, dimethallyl cyclohexanoylphosphonate, and dicrotyl cyclohexanoylphosphonate.

Suitable dihydrocarbyl acryloylphosphonates include dimethyl acryloylphosphonate, diethyl acryloylphosphonate, di-n-propyl acryloylphosphonate diisopropyl acryloylphosphonate, di-n-butyl acryloylphosphonate, diisobutyl acryloylphosphonate, di-t-butyl acryloylphosphonate, bis(2,2,2-trifluoroethyl) acryloylphosphonate, bis(2,4-dimethyl-3-pentyl) acryloylphosphonate, bis(2-ethylhexyl) acryloylphosphonate, dineopentyl acryloylphosphonate, bis(cyclohexylmethyl) acryloylphosphonate, dibenzyl acryloylphosphonate, dicyclobutyl acryloylphosphonate, dicyclopentyl acryloylphosphonate, dicyclohexyl acryloylphosphonate, diphenyl acryloylphosphonate, ditolyl acryloylphosphonate, dinaphthyl acryloylphosphonate, dially acryloylphosphonate, dimethallyl acryloylphosphonate, and dicrotyl acryloylphosphonate.

Suitable dihydrocarbyl methacryloylphosphonates include dimethyl methacryloylphosphonate, diethyl methacryloylphosphonate, di-n-propyl methacryloylphosphonate diisopropyl methacryloylphosphonate, di-n-butyl methacryloylphosphonate, diisobutyl methacryloylphosphonate, di-t-butyl methacryloylphosphonate, bis(2,2,2-trifluoroethyl) methacryloylphosphonate, bis(2,4-dimethyl-3-pentyl) methacryloylphosphonate, bis(2-ethylhexyl) methacryloylphosphonate, dineopentyl methacryloylphosphonate, bis(cyclohexylmethyl) methacryloylphosphonate, dibenzyl methacryloylphosphonate, dicyclobutyl methacryloylphosphonate, dicyclopentyl methacryloylphosphonate, dicyclohexyl methacryloylphosphonate, diphenyl methacryloylphosphonate, ditolyl methacryloylphosphonate, dinaphthyl methacryloylphosphonate, dially methacryloylphosphonate, dimethallyl methacryloylphosphonate, and dicrotyl methacryloylphosphonate.

Suitable dihydrocarbyl crotonylphosphonates include dimethyl crotonylphosphonate, diethyl crotonylphosphonate, di-n-propyl crotonylphosphonate diisopropyl crotonylphosphonate, di-n-butyl crotonylphosphonate, diisobutyl crotonylphosphonate, di-t-butyl crotonylphosphonate, bis(2,2,2-trifluoroethyl) crotonylphosphonate, bis(2,4-dimethyl-3-pentyl) crotonylphosphonate, bis(2-ethylhexyl) crotonylphosphonate, dineopentyl crotonylphosphonate, bis(cyclohexylmethyl) crotonylphosphonate, dibenzyl crotonylphosphonate, dicyclobutyl crotonylphosphonate, dicyclopentyl crotonylphosphonate, dicyclohexyl crotonylphosphonate, diphenyl crotonylphosphonate, ditolyl crotonylphosphonate, dinaphthyl crotonylphosphonate, dially crotonylphosphonate, dimethallyl crotonylphosphonate, and dicrotyl crotonylphosphonate.

Suitable dihydrocarbyl benzoylphosphonates include dimethyl benzoylphosphonate, diethyl benzoylphosphonate, di-n-propyl benzoylphosphonate diisopropyl benzoylphosphonate, di-n-butyl benzoylphosphonate, diisobutyl benzoylphosphonate, di-t-butyl benzoylphosphonate, bis(2,2,2-trifluoroethyl) benzoylphosphonate, bis(2,4-dimethyl-3-pentyl) benzoylphosphonate, bis(2-ethylhexyl) benzoylphosphonate, dineopentyl benzoylphosphonate, bis(cyclohexylmethyl) benzoylphosphonate, dibenzyl benzoylphosphonate, dicyclobutyl benzoylphosphonate, dicyclopentyl benzoylphosphonate, dicyclohexyl benzoylphosphonate, diphenyl benzoylphosphonate, ditolyl benzoylphosphonate, dinaphthyl benzoylphosphonate, dially benzoylphosphonate, dimethallyl benzoylphosphonate, and dicrotyl benzoylphosphonate.

Suitable dihydrocarbyl toluoylphosphonates include dimethyl toluoylphosphonate, diethyl toluoylphosphonate, di-n-propyl toluoylphosphonate diisopropyl toluoylphosphonate, di-n-butyl toluoylphosphonate, diisobutyl toluoylphosphonate, di-t-butyl toluoylphosphonate, bis(2,2,2-trifluoroethyl) toluoylphosphonate, bis(2,4-dimethyl-3-pentyl) toluoylphosphonate, bis(2-ethylhexyl) toluoylphosphonate, dineopentyl toluoylphosphonate, bis(cyclohexylmethyl) toluoylphosphonate, dibenzyl toluoylphosphonate, dicyclobutyl toluoylphosphonate, dicyclopentyl toluoylphosphonate, dicyclohexyl toluoylphosphonate, diphenyl toluoylphosphonate, ditolyl toluoylphosphonate, dinaphthyl toluoylphosphonate, dially toluoylphosphonate, dimethallyl toluoylphosphonate, and dicrotyl toluoylphosphonate.

Suitable dihydrocarbyl anisoylphosphonates include dimethyl anisoylphosphonate, diethyl anisoylphosphonate, di-n-propyl anisoylphosphonate diisopropyl anisoylphosphonate, di-n-butyl anisoylphosphonate, diisobutyl anisoylphosphonate, di-t-butyl anisoylphosphonate, bis(2,2,2-trifluoroethyl) anisoylphosphonate, bis(2,4-dimethyl-3-pentyl) anisoylphosphonate, bis(2-ethylhexyl) anisoylphosphonate, dineopentyl anisoylphosphonate, bis(cyclohexylmethyl) anisoylphosphonate, dibenzyl anisoylphosphonate, dicyclobutyl anisoylphosphonate, dicyclopentyl anisoylphosphonate, dicyclohexyl anisoylphosphonate, diphenyl anisoylphosphonate, ditolyl anisoylphosphonate, dinaphthyl anisoylphosphonate, dially anisoylphosphonate, dimethallyl anisoylphosphonate, and dicrotyl anisoylphosphonate.

Suitable dihydrocarbyl naphthoylphosphonates include dimethyl naphthoylphosphonate, diethyl naphthoylphosphonate, di-n-propyl naphthoylphosphonate diisopropyl naphthoylphosphonate, di-n-butyl naphthoylphosphonate, diisobutyl naphthoylphosphonate, di-t-butyl naphthoylphosphonate, bis(2,2,2-trifluoroethyl) naphthoylphosphonate, bis(2,4-dimethyl-3-pentyl) naphthoylphosphonate, bis(2-ethylhexyl) naphthoylphosphonate, dineopentyl naphthoylphosphonate, bis(cyclohexylmethyl) naphthoylphosphonate, dibenzyl naphthoylphosphonate, dicyclobutyl naphthoylphosphonate, dicyclopentyl naphthoylphosphonate, dicyclohexyl naphthoylphosphonate, diphenyl naphthoylphosphonate, ditolyl naphthoylphosphonate, dinaphthyl naphthoylphosphonate, dially naphthoylphosphonate, dimethallyl naphthoylphosphonate, and dicrotyl naphthoylphosphonate.

Cyclic α-acylphosphonate diesters contain a ring structure that is formed by a divalent organic group bridging the two oxygen atoms that are singly-bonded to the phosphorus atom. These cyclic α-acylphosphonate diesters may be represented by the following structure: 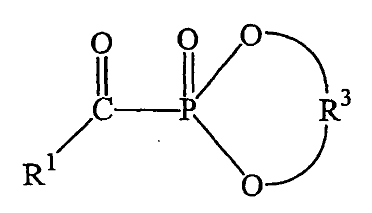 where R¹ is the same as defined above and R³ is a divalent organic group. Preferably, R¹ is a hydrocarbyl groups such as, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 carbon atom, or the appropriate minimum number of carbon atoms to form the group, up to 20 carbon atoms. Preferably, R³ is a hydrocarbylene group such as, alkylene, substituted alkylene, cycloalkylene, substituted cycloalkylene, alkenylene, substituted alkenylene, cycloalkenylene, substituted cycloalkenylene, arylene, and substituted arylene groups, with each group preferably containing from 1 carbon atom, or the appropriate minimum number of carbon atoms to form the group, up to 20 carbon atoms. These hydrocarbyl and hydrocarbylene groups may contain heteroatoms such as, but not limited to, nitrogen, oxygen, boron, silicon, sulfur, and phosphorus atoms.

Suitable types of cyclic α-acylphosphonate diesters include, hydrocarbylene formylphosphonates, hydrocarbylene acetylphosphonates, hydrocarbylene propionylphosphonates, hydrocarbylene butyrylphosphonates, hydrocarbylene isobutyrylphosphonates, hydrocarbylene pivaloylphosphonates, hydrocarbylene 2-ethylhexanoylphosphonates, hydrocarbylene cyclohexanoylphosphonates, hydrocarbylene acryloylphosphonates, hydrocarbylene methacryloylphosphonates, hydrocarbylene crotonylphosphonates, hydrocarbylene benzoylphosphonates, hydrocarbylene toluoylphosphonates, hydrocarbylene anisoylphosphonates, and hydrocarbylene naphthoylphosphonates. Mixtures of the above cyclic a-acylphosphonate diesters may also be utilized.

Suitable hydrocarbylene formylphosphonates include 2-oxo-2-formyl-5-butyl-5-ethyl-1,3,2-dioxaphosphorinane, 2-oxo-2-formyl-5,5-dimethyl-1,3,2-dioxaphosphorinane, 2-oxo-2-formyl-1,3,2-dioxaphosphorinane, 2-oxo-2-formyl-4-methyl-1,3,2-dioxaphosphorinane, 2-oxo-2-formyl-5-ethyl-5-methyl-1,3,2-dioxaphosphorinane, 2-oxo-2-formyl-5,5-diethyl-1,3,2-dioxaphosphorinane, 2-oxo-2-formyl-5-methyl-5-propyl-1,3,2-dioxaphosphorinane, 2-oxo-2-formyl-4-isopropyl-5,5-dimethyl-1,3,2-dioxaphosphorinane, 2-oxo-2-formyl-4,6-dimethyl-1,3,2-dioxaphosphorinane, 2-oxo-2-formyl-4-propyl-5-ethyl-1,3,2-dioxaphosphorinane, 2-oxo-2-formyl-4-methyl-1,3,2-dioxaphospholane, 2-oxo-2-formyl-4,5-dimethyl-1,3,2-dioxaphospholane, 2-oxo-2-formyl-4,4,5,5-tetramethyl-1,3,2-dioxaphospholane, 2-oxo-2-formyl-4,5-benzo-1,3,2-dioxaphospholane, 2-oxo-2-formyl-4,5-(3'-methylbenzo)-1,3,2-dioxaphospholane, 2-oxo-2-formyl-4,5-(4'-methylbenzo)-1,3,2-dioxaphospholane, 2-oxo-2-formyl-4,5-(4'-*tert*-butylbenzo)-1,3,2-dioxaphospholane, and 2-oxo-2-formyl-4,5-naphthalo-1,3,2-dioxaphospholane.

Suitable hydrocarbylene acetylphosphonates include 2-oxo-2-acetyl-5-butyl-5-ethyl-1,3,2-dioxaphosphorinane, 2-oxo-2-acetyl-5,5-dimethyl-1,3,2-dioxaphosphorinane, 2-oxo-2-acetyl-1,3,2-dioxaphosphorinane, 2-oxo-2-acetyl-4-methyl-1,3,2-dioxaphosphorinane, 2-oxo-2-acetyl-5-ethyl-5-methyl-1,3,2-dioxaphosphorinane, 2-oxo-2-acetyl-5,5-diethyl-1,3,2-dioxaphosphorinane, 2-oxo-2-acetyl-5-methyl-5-propyl-1,3,2-dioxaphosphorinane, 2-oxo-2-acetyl-4-isopropyl-5,5-dimethyl-1,3,2-dioxaphosphorinane, 2-oxo-2-acetyl-4,6-dimethyl-1,3,2-dioxaphosphorinane, 2-oxo-2-acetyl-4-propyl-5-ethyl-1,3,2-dioxaphosphorinane, 2-oxo-2-acetyl-4-methyl-1,3,2-dioxaphospholane, 2-oxo-2-acetyl-4,5-dimethyl-1,3,2-dioxaphospholane, 2-oxo-2-acetyl-4,4,5,5-tetramethyl-1,3,2-dioxaphospholane, 2-oxo-2-acetyl-4,5-benzo-1,3,2-dioxaphospholane, 2-oxo-2-acetyl-4,5-(3'-methylbenzo)-1,3,2-dioxaphospholane, 2-oxo-2-acetyl-4,5-(4'-methylbenzo)-1,3,2-dioxaphospholane, 2-oxo-2-acetyl-4,5-(4'-tert-butylbenzo)-1,3,2-dioxaphospholane, and 2-oxo-2-acetyl-4,5-naphthalo-1,3,2-dioxaphospholane.

Suitable hydrocarbylene isobutyrylphosphonates include 2-oxo-2-isobutyryl-5-butyl-5-ethyl-1,3,2-dioxaphosphorinane, 2-oxo-2-isobutyryl-5,5-dimethyl-1,3,2-dioxaphosphorinane, 2-oxo-2-isobutyryl-1,3,2-dioxaphosphorinane, 2-oxo-2-isobutyryl-4-methyl-1,3,2-dioxaphosphorinane, 2-oxo-2-isobutyryl-5-ethyl-5-methyl-1,3,2-dioxaphosphorinane, 2-oxo-2-isobutyryl-5,5-diethyl-1,3,2-dioxaphosphorinane, 2-oxo-2-isobutyryl-5-methyl-5-propyl-1,3,2-dioxaphosphorinane, 2-oxo-2-isobutyryl-4-isopropyl-5,5-dimethyl-1,3,2-dioxaphosphorinane, 2-oxo-2-isobutyryl-4,6-dimethyl-1,3,2-dioxaphosphorinane, 2-oxo-2-isobutyryl-4-propyl-5-ethyl-1,3,2-dioxaphosphorinane, 2-oxo-2-isobutyryl-4-methyl-1,3,2-dioxaphospholane, 2-oxo-2-isobutyryl-4,5-dimethyl-1,3,2-dioxaphospholane, 2-oxo-2-isobutyryl-4,4,5,5-tetramethyl-1,3,2-dioxaphospholane, 2-oxo-2-isobutyryl-4,5-benzo-1,3,2-dioxaphospholane, 2-oxo-2-isobutyryl-4,5-(3'-methylbenzo)-1,3,2-dioxaphospholane, 2-oxo-2-isobutyryl-4,5-(4'-methylbenzo)-1,3,2-dioxaphospholane, 2-oxo-2-isobutyryl-4,5-(4'-tert-butylbenzo)-1,3,2-dioxaphospholane, and 2-oxo-2-isobutyryl-4,5-naphthalo-1,3,2-dioxaphospholane.

Suitable hydrocarbylene pivaloylphosphonates include 2-oxo-2-pivaloyl-5-butyl-5-ethyl-1,3,2-dioxaphosphorinane, 2-oxo-2-pivaloyl-5,5-dimethyl-1,3,2-dioxaphosphorinane, 2-oxo-2-pivaloyl-1,3,2-dioxaphosphorinane, 2-oxo-2-pivaloyl-4-methyl-1,3,2-dioxaphosphorinane, 2-oxo-2-pivaloyl-5-ethyl-5-methyl-1,3,2-dioxaphosphorinane, 2-oxo-2-pivaloyl-5,5-diethyl-1,3,2-dioxaphosphorinane, 2-oxo-2-pivaloyl-5-methyl-5-propyl-1,3,2-dioxaphosphorinane, 2-oxo-2-pivaloyl-4-isopropyl-5,5-dimethyl-1,3,2-dioxaphosphorinane, 2-oxo-2-pivaloyl-4,6-dimethyl-1,3,2-dioxaphosphorinane, 2-oxo-2-pivaloyl-4-propyl-5-ethyl-1,3,2-dioxaphosphorinane, 2-oxo-2-pivaloyl-4-methyl-1,3,2-dioxaphospholane, 2-oxo-2-pivaloyl-4,5-dimethyl-1,3,2-dioxaphospholane, 2-oxo-2-pivaloyl-4,4,5,5-tetramethyl-1,3,2-dioxaphospholane, 2-oxo-2-pivaloyl-4,5-benzo-1,3,2-dioxaphospholane, 2-oxo-2-pivaloyl-4,5-(3'-methylbenzo)-1,3,2-dioxaphospholane, 2-oxo-2-pivaloyl-4,5-(4'-methylbenzo)-1,3,2-dioxaphospholane, 2-oxo-2-pivaloyl-4,5-(4'-tert-butylbenzo)-1,3,2-dioxaphospholane, and 2-oxo-2-pivaloyl-4,5-naphthalo-1,3,2-dioxaphospholane.

Suitable hydrocarbylene cyclohexanoylphosphonates include 2-oxo-2-cyclohexanoyl-5-butyl-5-ethyl-1,3,2-dioxaphosphorinane, 2-oxo-2-cyclohexanoyl-5,5-dimethyl-1,3,2-dioxaphosphorinane, 2-oxo-2-cyclohexanoyl-1,3,2-dioxaphosphorinane, 2-oxo-2-cyclohexanoyl-4-methyl-1,3,2-dioxaphosphorinane, 2-oxo-2-cyclohexanoyl-5-ethyl-5-methyl-1,3,2-dioxaphosphorinane, 2-oxo-2-cyclohexanoyl-5,5-diethyl-1,3,2-dioxaphosphorinane, 2-oxo-2-cyclohexanoyl-5-methyl-5-propyl-1,3,2-dioxaphosphorinane, 2-oxo-2-cyclohexanoyl-4-isopropyl-5,5-dimethyl-1,3,2-dioxaphosphorinane, 2-oxo-2-cyclohexanoyl-4,6-dimethyl-1,3,2-dioxaphosphorinane, 2-oxo-2-cyclohexanoyl-4-propyl-5-ethyl-1,3,2-dioxaphosphorinane, 2-oxo-2-cyclohexanoyl-4-methyl-1,3,2-dioxaphospholane, 2-oxo-2-cyclohexanoyl-4,5-dimethyl-1,3,2-dioxaphospholane, 2-oxo-2-cyclohexanoyl-4,4,5,5-tetramethyl-1,3,2-dioxaphospholane, 2-oxo-2-cyclohexanoyl-4,5-benzo-1,3,2-dioxaphospholane, 2-oxo-2-cyclohexanoyl-4,5-(3'-methylbenzo)-1,3,2-dioxaphospholane, 2-oxo-2-cyclohexanoyl-4,5-(4'-methylbenzo)-1,3,2-dioxaphospholane, 2-oxo-2-cyclohexanoyl-4,5-(4'-tert-butylbenzo)-1,3,2-dioxaphospholane, and 2-oxo-2-cyclohexanoyl-4,5-naphthalo-1,3,2-dioxaphospholane.

Suitable hydrocarbylene acryloylphosphonates include 2-oxo-2-acryloyl-5-butyl-5-ethyl-1,3,2-dioxaphosphorinane, 2-oxo-2-acryloyl-5,5-dimethyl-1,3,2-dioxaphosphorinane, 2-oxo-2-acryloyl-1,3,2-dioxaphosphorinane, 2-oxo-2-acryloyl-4-methyl-1,3,2-dioxaphosphorinane, 2-oxo-2-acryloyl-5-ethyl-5-methyl-1,3,2-dioxaphosphorinane, 2-oxo-2-acryloyl-5,5-diethyl-1,3,2-dioxaphosphorinane, 2-oxo-2-acryloyl-5-methyl-5-propyl-1,3,2-dioxaphosphorinane, 2-oxo-2-acryloyl-4-isopropyl-5,5-dimethyl-1,3,2-dioxaphosphorinane, 2-oxo-2-acryloyl-4,6-dimethyl-1,3,2-dioxaphosphorinane, 2-oxo-2-acryloyl-4-propyl-5-ethyl-1,3,2-dioxaphosphorinane, 2-oxo-2-acryloyl-4-methyl-1,3,2-dioxaphospholane, 2-oxo-2-acryloyl-4,5-dimethyl-1,3,2-dioxaphospholane, 2-oxo-2-acryloyl-4,4,5,5-tetramethyl-1,3,2-dioxaphospholane, 2-oxo-2-acryloyl-4,5-benzo-1,3,2-dioxaphospholane, 2-oxo-2-acryloyl-4,5-(3'-methylbenzo)-1,3,2-dioxaphospholane, 2-oxo-2-acryloyl-4,5-(4'-methylbenzo)-1,3,2-dioxaphospholane, 2-oxo-2-acryloyl-4,5-(4'-*tert*-butylbenzo)-1,3,2-dioxaphospholane, and 2-oxo-2-acryloyl-4,5-naphthalo-1,3,2-dioxaphospholane.

Suitable hydrocarbylene benzoylphosphonates include 2-oxo-2-benzoyl-5-butyl-5-ethyl-1,3,2-dioxaphosphorinane, 2-oxo-2-benzoyl-5,5-dimethyl-1,3,2-dioxaphosphorinane, 2-oxo-2-benzoyl-1,3,2-dioxaphosphorinane, 2-oxo-2-benzoyl-4-methyl-1,3,2-dioxaphosphorinane, 2-oxo-2-benzoyl-5-ethyl-5-methyl-1,3,2-dioxaphosphorinane, 2-oxo-2-benzoyl-5,5-diethyl-1,3,2-dioxaphosphorinane, 2-oxo-2-benzoyl-5-methyl-5-propyl-1,3,2-dioxaphosphorinane, 2-oxo-2-benzoyl-4-isopropyl-5,5-dimethyl-1,3,2-dioxaphosphorinane, 2-oxo-2-benzoyl-4,6-dimethyl-1,3,2-dioxaphosphorinane, 2-oxo-2-benzoyl-4-propyl-5-ethyl-1,3,2-dioxaphosphorinane, 2-oxo-2-benzoyl-4-methyl-1,3,2-dioxaphospholane, 2-oxo-2-benzoyl-4,5-dimethyl-1,3,2-dioxaphospholane, 2-oxo-2-benzoyl-4,4,5,5-tetramethyl-1,3, 2-dioxaphospholane, 2-oxo-2-benzoyl-4,5-benzo-1, 3,2-dioxaphospholane, 2-oxo-2-benzoyl-4,5-(3'-methylbenzo)-1,3,2-dioxaphospholane, 2-oxo-2-benzoyl-4,5-(4'-methylbenzo)-1,3,2-dioxaphospholane, 2-oxo-2-benzoyl-4,5-(4'-*tert*-butylbenzo)-1,3,2-dioxaphospholane, and 2-oxo-2-benzoyl-4,5-naphthalo-1,3,2-dioxaphospholane.

Various organoaluminum compounds or mixtures thereof can be used as ingredient (c) of the catalyst composition. The term "organoaluminum compound" refers to any aluminum compound containing at least one aluminum-carbon bond. Organoaluminum compounds that are soluble in a hydrocarbon solvent are preferred.

A preferred class of organoaluminum compounds that can be utilized is represented by the general formula AlRₙX₃₋ₙ, where each R, which may be the same or different, is a mono-valent organic group that is attached to the aluminum atom via a carbon atom, where each X, which may be the same or different, is a hydrogen atom, a carboxylate group, an alkoxide group, or an aryloxide group, and where n is an integer of 1 to 3. Preferably, each R is a hydrocarbyl group such as, but not limited to, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 carbon atom, or the appropriate minimum number of carbon atoms to form the group, up to 20 carbon atoms. These hydrocarbyl groups may contain heteroatoms such as, nitrogen, oxygen, boron, silicon, sulfur, and phosphorus atoms. Preferably, each X is a carboxylate group, an alkoxide group, or an aryloxide group, with each group preferably containing from 1 carbon atom, or the appropriate minimum number of carbon atoms to form the group, up to 20 carbon atoms.

Suitable organoaluminum compounds include, but are not limited to, trihydrocarbylaluminum, dihydrocarbylaluminum hydride, hydrocarbylaluminum dihydride, dihydrocarbylaluminum carboxylate, hydrocarbylaluminum bis(carboxylate), dihydrocarbylaluminum alkoxide, hydrocarbylaluminum dialkoxide, dihydrocarbylaluminum aryloxide, hydrocarbylaluminum diaryloxide, and the like, and mixtures thereof. Trihydrocarbylaluminum compounds are preferred.

Suitable organoaluminum compounds include trimethylaluminum, triethylaluminum, triisobutylaluminum, tri-n-propylaluminum, triisopropylaluminum, tri-n-butylaluminum, tri-t-butylaluminum, tri-n-pentylaluminum, trineopentylaluminum, tri-n-hexylaluminum, tri-n-octylaluminum, tris(2-ethylhexyl)aluminum, tricyclohexylaluminum, tris(1-methylcyclopentyl)aluminum, tris(1-adamantyl)aluminum, tris(2-adamantyl) aluminum, triphenylaluminum, tri-p-tolylaluminum, tris(2,6-dimethylphenyl)aluminum, trimesitylaluminum, tribenzylaluminum, diethylphenylaluminum, diethyl-p-tolylaluminum, diethylbenzylaluminum, ethyldiphenylaluminum, ethyldi-p-tolylaluminum, ethyldibenzylaluminum, diethylaluminum hydride, di-n-propylaluminum hydride, diisopropylaluminum hydride, di-n-butylaluminum hydride, diisobutylaluminum hydride, di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride, ethylaluminum dihydride, n-propylaluminum dihydride, isopropylaluminum dihydride, n-butylaluminum dihydride, isobutylaluminum dihydride, n-octylaluminum dihydride, dimethylaluminum hexanoate, diethylaluminum octoate, diisobutylaluminum 2-ethylhexanoate, dimethylaluminum neodecanoate, diethylaluminum stearate, diisobutylaluminum oleate, methylaluminum bis(hexanoate), ethylaluminum bis(octoate), isobutylaluminum bis(2-ethylhexanoate), methylaluminum bis(neodecanoate), ethylaluminum bis(stearate), isobutylaluminum bis(oleate), dimethylaluminum methoxide, diethylaluminum methoxide, diisobutylaluminum methoxide, dimethylaluminum ethoxide, diethylaluminum ethoxide, diisobutylaluminum ethoxide, dimethylaluminum phenoxide, diethylaluminum phenoxide, diisobutylaluminum phenoxide, methylaluminum dimethoxide, ethylaluminum dimethoxide, isobutylaluminum dimethoxide, methylaluminum diethoxide, ethylaluminum diethoxide, isobutylaluminum diethoxide, methylaluminum diphenoxide, ethylaluminum diphenoxide, isobutylaluminum diphenoxide, and the like, and mixtures thereof.

Another class of suitable organoaluminum compounds is aluminoxanes. Aluminoxanes comprise oligomeric linear aluminoxanes that can be represented by the general formula: 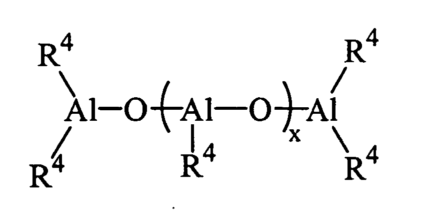 and oligomeric cyclic aluminoxanes that can be represented by the general formula: 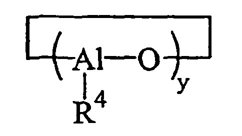 where x is an integer of 1 to 100, preferably 10 to 50; y is an integer of 2 to 100, preferably 3 to 20; and where each R⁴, which may be the same or different, is a mono-valent organic group that is attached to the aluminum atom via a carbon atom. Preferably, each R⁴ is a hydrocarbyl group such as, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group preferably containing from 1 carbon atom, or the appropriate minimum number of carbon atoms to form the group, up to 20 carbon atoms. These hydrocarbyl groups may contain heteroatoms such as, nitrogen, oxygen, silicon, sulfur, and phosphorus atoms. It should be noted that the number of moles of the aluminoxane as used in this application refers to the number of moles of the aluminum atoms rather than the number of moles of the oligomeric aluminoxane molecules. This convention is commonly employed in the art of catalysis utilizing aluminoxanes.

Aluminoxanes can be prepared by reacting trihydrocarbylaluminum compounds with water. This reaction can be performed according to known methods, such as (1) a method in which the trihydrocarbylaluminum compound is dissolved in an organic solvent and then contacted with water, (2) a method in which the trihydrocarbylaluminum compound is reacted with water of crystallization contained in, for example, metal salts, or water adsorbed in inorganic or organic compounds, and (3) a method in which the trihydrocarbylaluminum compound is reacted with water in the presence of the monomer or monomer solution that is to be polymerized.

Suitable aluminoxane compounds include methylaluminoxane (MAO), modified methylaluminoxane (MMAO), ethylaluminoxane, n-propylaluminoxane, isopropylaluminoxane, n-butylaluminoxane, t-butylaluminoxane, isobutylaluminoxane, 1-adamantylaluninoxane, 2-adamantylaluminoxane, n-pentylaluminoxane, neopentylaluminoxane, n-hexylaluminoxane, n-octylaluminoxane, 2-ethylhexylaluminoxane, cyclohexylaluminoxane, 1-methylcyclopentylaluminoxane, phenylaluminoxane, 2,6-dimethylphenylaluminoxane, mesitylaluminoxane, and the like, and mixtures thereof. Isobutylaluminoxane is particularly useful on the grounds of its availability and its solubility in aliphatic and cycloaliphatic hydrocarbon solvents. Modified methylaluminoxane can be formed by substituting 20-80% of the methyl groups of methylaluminoxane with C₂ to C₁₂ hydrocarbyl groups, preferably with isobutyl groups, by using techniques known to those skilled in the art.

In one embodiment, ingredient (c) includes at least one organoaluminum compound that is sterically hindered and at least one organoaluminum compound that is sterically less hindered or, more simply stated, sterically non-hindered. The organoaluminum compounds employed to form ingredient (c) are generally characterized by containing at least one organic group that is attached to an aluminum atom via an aluminum-carbon bond. The steric hindrance of these organic groups determines whether an organoaluminum compound is sterically hindered or non-hindered. Hindered organic groups result in hindered organoaluminum compounds. The steric hindrance of these organic groups may be explained with reference to the following figure, which shows an organic group attached to a trivalent aluminum atom: 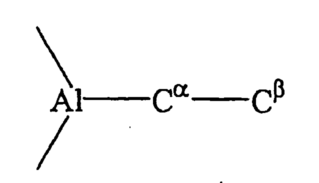 where C^{α} will be referred to as the α carbon and C^{β} will be referred to as the β carbon. The steric hindrance of the organic group can be determined by the substitution patterns of the α and β carbons. Generally, an organic group is considered to be sterically hindered if α or β carbon is highly substituted. Therefore, an organic group is sterically hindered if the α carbon is secondary or tertiary, *i.e*., has only one or no hydrogen atom bonded thereto. Also, an organic group is sterically hindered where the β carbon has only one or no hydrogen atom bonded thereto. On the other hand, an organic group is sterically non-hindered where the α carbon is primary, *i.e*., has two hydrogen atoms bonded thereto, and, additionally, the β carbon has at least two hydrogen atoms bonded thereto.

Examples of sterically hindered organic groups include isopropyl, 2-butyl, isobutyl, t-butyl, 2,2-dimethyl-1-propyl (also called neopentyl), 2-methyl-2-butyl (also called t-amyl), 3,3-dimethyl-2-butyl, 2,4-dimethyl-3-pentyl, 2-ethylhexyl, cyclohexyl, cycloheptyl, cyclooctyl, 1-methylcyclopentyl, 1-adamantyl, 2-adamantyl, 2,6-dimethylphenyl, and mesityl groups.

Examples of sterically non-hindered organic groups include methyl, fluoromethyl, difluoromethyl, trifluoromethyl, ethyl, 2,2,2-trifluoroethyl, n-propyl, n-butyl, n-pentyl, n-hexyl, n-heptyl, n-octyl, n-nonyl, n-decyl, n-dodecyl, 4-methyl-1-pentyl (also called isohexyl), 5-methyl-1-hexyl (also called isoheptyl), and 6-methyl-1-heptyl (also called isooctyl) groups.

Examples of sterically hindered organoaluminum compounds include triisopropylaluminum, tris(2-butyl)aluminum, triisobutylaluminum, tri-t-butylaluminum, tris(2,2-dimethyl-1-propyl)aluminum (also called trineopentylaluminum), tris(2-methyl-2-butyl)aluminum (also called tri-t-amylaluminum), tris(3,3-dimethyl-2-butyl)aluminum, tris(2,4-dimethyl-3-pentyl)aluminum, tris(2-ethylhexyl)aluminum, tricyclohexylaluminum, tricycloheptylaluminum, tricyclooctylaluminum, tris(1-methylcyclopentyl) aluminum, tris(1-adamantyl)aluminum, tris(2-adamantyl)aluminum, tris(2,6-dimethylphenyl)aluminum, trimesitylaluminum, isopropylaluminoxane, isobutylaluminoxane, t-butylaluminoxane, neopentylaluminoxane, 2-ethylhexylaluminoxane, cyclohexylaluminoxane, 1-methylcyclopentylaluminoxane, 1-adamantylaluminoxane, 2-adamantylaluminoxane, 2,6-dimethylphenylaluminoxane, and mesitylaluminoxane.

Examples of sterically non-hindered organoaluminum compounds include trimethylaluminum, tris(fluoromethyl) aluminum, tris(difluoromethyl)aluminum, tris(trifluoromethyl) aluminum, triethylaluminum, tris(2,2,2-trifluoroethyl)aluminum, tri-n-propylaluminum, tri-n-butylaluminum, tri-n-pentylaluminum, tri-n-hexylaluminum, tri-n-heptylaluminum, tri-n-octylaluminum, tri-n-nonylaluminum, tri-n-decylaluminum, tri-n-dodecylaluminum, tris(4-methyl-1-pentyl) aluminum (also called triisohexylaluminum), tris(5-methyl-1-hexyl)aluminum (also called triisoheptylaluminum), tris(6-methyl-1-heptyl)aluminum (also called triisooctylaluminum), methylaluminoxane (MAO), ethylaluminoxane, n-propylaluminoxane, n-butylaluminoxane, n-pentylaluminoxane, n-hexylaluminoxane, and n-octylaluminoxane.

The catalyst composition of this invention has very high catalytic activity for polymerizing conjugated dienes, such as 1,3-butadiene, into polymers, such as syndiotactic 1,2-polybutadiene, over a wide range of catalyst concentrations and catalyst ingredient ratios. The polymers having the most desirable properties, however, are obtained within a narrower range of catalyst concentrations and catalyst ingredient ratios. Further, it is believed that the three catalyst ingredients (a), (b), and (c) may interact to form an active catalyst species. Accordingly, the optimum concentration for any one catalyst ingredient is dependent upon the concentrations of the other catalyst ingredients. The molar ratio of the α-acylphosphonate diester to the iron-containing compound (P/Fe) can be varied from 0.5:1 to 50:1, more preferably from 1:1 to 25:1, and even more preferably from 2:1 to 10:1. The molar ratio of the organoaluminum compound to the iron-containing compound (Al/Fe) can be varied from 1:1 to 200:1, more preferably from 2:1 to 100:1, and even more preferably from 3:1 to 50:1.

As noted above, certain embodiments of this invention provide catalyst systems that are useful for oligomerizing conjugated dienes. These systems likewise have a high catalytic activity over a wide range of catalyst concentrations and catalyst ingredient ratios. Where the catalyst composition includes (a) a halogen-containing iron compound, (b) an α-acyl phosphonate diester, and (c) an organoaluminum compound, the molar ratio of the α-acyl phosphonate diester to the halogen-containing iron compound (P/Fe) can be varied from 0.5:1 to 50:1, more preferably from 1:1 to 25:1, and even more preferably from 2:1 to 10:1. And, the molar ratio of the organoaluminum compound to the halogen-containing iron compound (Al/Fe) can be varied from 1:1 to 200:1, more preferably from 2:1 to 100:1, and even more preferably from 3:1 to 50:1.

Where the catalyst composition includes (a) an iron-containing compound and a halogen-containing compound, (b) an α-acyl phosphonate diester, and (c) an organoaluminum compound, the molar ratio of the α-acyl phosphonate diester to the iron-containing compound (P/Fe) can be varied from 0.5:1 to 50:1, more preferably from 1:1 to 25:1, and even more preferably from 2:1 to 10:1. The molar ratio of the halogen-containing compound to the iron-containing compound (halogen/Fe) can be varied from 0.5:1 to 20:1, more preferably from 1:1 to 10:1, and even more preferably from 2:1 to 6:1. And, the molar ratio of the organoaluminum compound to the iron-containing compound (Al/Fe) can be varied from 1:1 to 200:1, more preferably from 2:1 to 100:1, and even more preferably from 3:1 to 50:1.

The catalyst composition is formed by combining or mixing the three catalyst ingredients (a), (b), and (c). Although an active catalyst species is believed to result from this combination, the degree of interaction or reaction between the various ingredients or components is not known with any great degree of certainty. Therefore, the term "catalyst composition" has been employed to encompass a simple mixture of the ingredients, a complex of the various ingredients that is caused by physical or chemical forces of attraction, a chemical reaction product of the ingredients, or a combination of the foregoing.

The catalyst composition of this invention can be formed by using one of the following methods:
First, the catalyst composition may be formed *in situ* by adding the three catalyst ingredients to a solution containing monomer and solvent, or simply bulk monomer, in either a stepwise or simultaneous manner. When adding the catalyst ingredients in a stepwise manner, the sequence in which the catalyst ingredients are added is not critical. Preferably, however, the iron-containing compound is added first, followed by the α-acylphosphonate diester, and then followed by the organoaluminum compound or compounds. Where the catalyst composition includes a halogen-containing compound, it is preferred to add the halogen-containing compound after the iron-containing compound and the α-acylphosphonate, but before the organoaluminum compound.
Second, the three catalyst ingredients may be pre-mixed outside the polymerization system at an appropriate temperature, which is generally from -20°C to 80°C, and the resulting catalyst composition is then added to the monomer solution.
Third, the catalyst composition may be pre-formed in the presence of conjugated diene monomer. That is, the three catalyst ingredients are pre-mixed in the presence of a small amount of conjugated diene monomer at an appropriate temperature, which is generally from -20°C to 80°C. The amount of conjugated diene monomer that is used for pre-forming the catalyst can range from 1 to 500 moles per mole of the iron-containing compound, more preferably from 5 to 250 moles per mole of the iron-containing compound, and even more preferably from 10 to 100 moles per mole of the iron-containing compound. The resulting catalyst composition is then added to the remainder of the conjugated diene monomer that is to be polymerized (or oligomerized).
Fourth, the catalyst composition may be formed by using a two-stage procedure. The first stage involves reacting the iron-containing compound with the organoaluminum compound or compounds in the presence of a small amount of conjugated diene monomer at an appropriate temperature, which is generally from. -20°C to 80°C. In the second stage, the foregoing reaction mixture, the α-acylphosphonate diester, and where appropriate the halogen-containing compound, are charged in either a stepwise or simultaneous manner to the remainder of the conjugated diene monomer that is to be polymerized.
Fifth, an alternative two-stage procedure may also be employed. An iron-ligand complex is first formed by pre-combining the iron-containing compound with the α-acylphosphonate diester. Once formed, this iron-ligand complex is then combined with the organoaluminum compound or compounds to form the active catalyst species. The iron-ligand complex can be formed separately or in the presence of the conjugated diene monomer that is to be polymerized. This complexation reaction can be conducted at any convenient temperature at normal pressure, but for an increased rate of reaction, it is preferable to perform this reaction at room temperature or above. The time required for the formation of the iron-ligand complex is usually within the range of 10 minutes to 2 hours after mixing the iron-containing compound with the α-acylphosphonate diester. The temperature and time used for the formation of the iron-ligand complex will depend upon several variables including the particular starting materials and the solvent employed. Once formed, the iron-ligand complex can be used without isolation from the complexation reaction mixture. If desired, however, the iron-ligand complex may be isolated from the complexation reaction mixture before use.

When ingredient (c) includes a blend of two or more sterically distinct organoaluminum compounds, it is advantageous to preform this blend by combining the two or more organoaluminum compounds prior to mixing the blend with the other catalyst ingredients. Nevertheless, the blend of two or more organoaluminum compounds can also be formed in situ. That is, the two or more organoaluminum compounds are combined at the time of polymerization in the presence of the other catalyst ingredients and the monomer that is to be polymerized.

Where oligomers are the desired product, the catalyst system is preferably formed by using the following procedure. An iron-ligand complex is first formed by pre-combining the iron-containing compound or the halogen-containing iron compound with the α-acyl phosphonate diester. Once formed, this iron-ligand complex is combined with the organoaluminum compound, and where appropriate the halogen-containing compound, to form the active catalyst species.

When a solution of the catalyst composition or one or more of the catalyst ingredients is prepared outside the polymerization system as set forth in the foregoing methods, an organic solvent or carrier is preferably employed. The organic solvent may serve to dissolve the catalyst composition or ingredients, or the solvent may simply serve as a carrier in which the catalyst composition or ingredients may be suspended. The organic solvent preferably is inert to the catalyst composition. Useful solvents include hydrocarbon solvents such as aromatic hydrocarbons, aliphatic hydrocarbons, and cycloaliphatic hydrocarbons. Non-limiting examples of aromatic hydrocarbon solvents include benzene, toluene, xylenes, ethylbenzene, diethylbenzene, mesitylene, and the like. Examples of aliphatic hydrocarbon solvents include n-pentane, n-hexane, n-heptane, n-octane, n-nonane, n-decane, isopentane, isohexanes, isopentanes, isooctanes, 2,2-dimethylbutane, petroleum ether, kerosene, petroleum spirits, and the like. And, examples of cycloaliphatic hydrocarbon solvents include cyclopentane, cyclohexane, methylcyclopentane, methylcyclohexane, and the like. Commercial mixtures of the above hydrocarbons may also be used. For environmental reasons, aliphatic and cycloaliphatic solvents are highly preferred.

The catalyst composition of this invention exhibits very high catalytic activity for the polymerization of 1,3-butadiene into syndiotactic 1,2-polybutadiene. Although a preferred embodiment is directed toward the polymerization of 1,3-butadiene into syndiotactic 1,2-polybutadiene, other conjugated dienes can also be polymerized. Some specific examples of other conjugated dienes that can be polymerized include isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, and 2,4-hexadiene. Mixtures of two or more conjugated dienes may also be utilized in copolymerization. The foregoing also applies to those embodiments directed toward oligomerization.

The production of syndiotactic 1,2-polybutadiene is accomplished by polymerizing 1,3-butadiene in the presence of a catalytically effective amount of the foregoing catalyst composition. The total catalyst concentration to be employed in the polymerization mass depends on the interplay of various factors such as the purity of the ingredients, the polymerization temperature, the polymerization rate and conversion desired, and many other factors. Accordingly, a specific total catalyst concentration cannot be definitively set forth except to say that catalytically effective amounts of the respective catalyst ingredients should be used. Generally, the amount of the iron-containing compound used can be varied from 0.01 to 2 mmol per 100 g of 1,3-butadiene monomer, more preferably from 0.02 to 1.0 mmol per 100 g of 1,3-butadiene monomer, and even more preferably from 0.05 to 0.5 mmol per 100 g of 1,3-butadiene monomer. The foregoing also applies to those embodiments directed toward oligomerization.

The polymerization of 1,3-butadiene is preferably carried out in an organic solvent as the diluent. Accordingly, a solution polymerization system may be employed in which both the 1,3-butadiene monomer to be polymerized and the polymer formed are soluble in the polymerization medium. Alternatively, a precipitation polymerization system may be employed by choosing a solvent in which the polymer formed is insoluble. In both cases, an amount of organic solvent in addition to the amount of organic solvent that may be used in preparing the catalyst composition is usually added to the polymerization system. The additional organic solvent may be the same as or different from the organic solvent used in preparing the catalyst composition. It is normally desirable to select an organic solvent that is inert with respect to the catalyst composition employed to catalyze the polymerization. Exemplary hydrocarbon solvents have been set forth above. When a solvent is employed, the concentration of the 1,3-butadiene monomer to be polymerized is not limited to a special range. Preferably, however, the concentration of the 1,3-butadiene monomer present in the polymerization medium at the beginning of the polymerization should be in a range of from 3% to 80% by weight, more preferably from 5% to 50% by weight, and even more preferably from 10% to 30% by weight.

The polymerization of 1,3-butadiene may also be carried out by means of bulk polymerization, which refers to a polymerization environment where no solvents are employed. The bulk polymerization can be conducted either in a condensed liquid phase or in a gas phase.

In performing the polymerization of 1,3-butadiene, a molecular weight regulator may be employed to control the molecular weight of the syndiotactic 1,2-polybutadiene to be produced. As a result, the scope of the polymerization system can be expanded in such a manner that it can be used for the production of syndiotactic 1,2-polybutadiene having a wide range of molecular weights. Suitable types of molecular weight regulators that can be utilized include, α-olefins such as ethylene, propylene, 1-butene, 1-pentene, 1-hexene, 1-heptene, and 1-octene; accumulated diolefins such as allene and 1,2-butadiene; nonconjugated diolefins such as 1,6-octadiene, 5-methyl-1,4-hexadiene, 1,5-cyclooctadiene, 3,7-dimethyl-1,6-octadiene, 1,4-cyclohexadiene, 4-vinylcyclohexene, 1,4-pentadiene, 1,4-hexadiene, 1,5-hexadiene, 1,6-heptadiene, 1,2-divinylcyclohexane, 5-ethylidene-2-norbornene, 5-methylene-2-norbornene, 5-vinyl-2-norbornene, dicyclopentadiene, and 1,2,4-trivinylcyclohexane; acetylenes such as acetylene, methylacetylene, and vinylacetylene; and mixtures thereof. The amount of the molecular weight regulator used, expressed in parts per hundred parts by weight of the 1,3-butadiene monomer (phm), is from 0.01 to 10 phm, preferably from 0.02 to 2 phm, and more preferably from 0.05 to 1 phm.

The molecular weight of the syndiotactic 1,2-polybutadiene to be produced can also be effectively controlled by conducting the polymerization of 1,3-butadiene monomer in the presence of hydrogen gas. In this case, the partial pressure of hydrogen gas is preferably from 0.01 to 50 atmospheres.

The polymerization of 1,3-butadiene may be carried out as a batch process, a continuous process, or a semi-continuous process. In the semi-continuous process, 1,3-butadiene monomer is intermittently charged as needed to replace that monomer already polymerized. In any case, the polymerization is preferably conducted under anaerobic conditions by using an inert protective gas such as nitrogen, argon or helium, with moderate to vigorous agitation. The polymerization temperature may vary widely from a low temperature, such as -10°C or below, to a high temperature such as 100°C or above, with a preferred temperature range being from 20°C to 90°C. The heat of polymerization may be removed by external cooling, cooling by evaporation of the 1,3-butadiene monomer or the solvent, or a combination of the two methods. Although the polymerization pressure employed may vary widely, a preferred pressure range is from 1 atmosphere to 10 atmospheres.

Once a desired conversion is achieved, the polymerization can be stopped by adding a polymerization terminator that inactivates the catalyst. Typically, the terminator employed is a protic compound, which includes, but is not limited to, an alcohol, a carboxylic acid, an inorganic acid, water, or a mixture thereof. An antioxidant such as 2,6-di-*tert*-butyl-4-methylphenol may be added along with, before or after the addition of the terminator. The amount of the antioxidant employed is usually in the range of 0.2% to 1% by weight of the polymer product. When the polymerization has been stopped, the syndiotactic 1,2-polybutadiene product can be recovered from the polymerization mixture by utilizing conventional procedures of desolventization and drying. For instance, the polymer may be isolated from the polymerization mixture by coagulating the polymerization mixture with an alcohol such as methanol, ethanol, or isopropanol, followed by filtration, or by steam distilling the solvent and the unreacted 1,3-butadiene monomer, followed by filtration. The isolated polymer product is then dried to remove residual amounts of solvent and water. Alternatively, the polymer may be isolated from the polymerization mixture by directly drum drying the polymer cement.

The iron-based catalyst composition can be manipulated to vary the characteristics of the resulting conjugated diene polymer. As noted above, an embodiment of this invention is directed toward a process for producing syndiotactic 1,2-polybutadiene by employing a blend of two or more organoaluminum compounds that have distinct steric hindrance. As a result, the melting temperature of the syndiotactic 1,2-polybutadiene can be manipulated. In general, it has been found that the use of a sterically hindered organoaluminum compound within the iron-based catalyst composition gives rise to a polymer having a relatively high melting temperature, and that the use of a sterically non-hindered organoaluminum compound within the iron-based catalyst composition gives rise to a polymer having a relatively low melting temperature. Surprisingly, it has been discovered that by employing a blend of sterically dissimilar organoaluminum compounds, one can tailor the melting temperature of the resulting polymer. In other words, by using a blend of a sterically hindered organoaluminum compound that yields a polymer having a relatively high melting temperature and a sterically non-hindered organoaluminum compound that yields a polymer having a relatively low melting temperature, one can obtain a polymer whose melting temperature is somewhere between the relatively high and relative low temperatures. Moreover, the melting temperature of the polymer can be tailored by adjusting the molar ratio of the hindered to non-hindered organoaluminum compounds within the blend of two or more sterically distinct organoaluminum compounds. In general, the melting temperature of the polymer can be increased by increasing the molar ratio of the hindered to non-hindered organoaluminum compounds. Likewise, the melting temperature of the polymer can be decreased by decreasing the molar ratio of the hindered to non-hindered organoaluminum compounds.

It has also been found that the molecular weight, 1,2-linkage content, and syndiotacticity of the syndiotactic 1,2-polybutadiene can be manipulated by adjusting the molar ratio of the hindered to non-hindered organoaluminum compounds within the blend of two or more sterically distinct organoaluminum compounds. The molecular weight, 1,2-linkage content, and syndiotacticity of the polymer can be increased by increasing the molar ratio of the hindered to non-hindered organoaluminum compounds. Likewise, the molecular weight, 1,2-linkage content, and syndiotacticity of the polymer can be decreased by decreasing the molar ratio of the hindered to non-hindered organoaluminum compounds.

Likewise, the melting temperature, 1,2-linkage content, and syndiotacticity of the syndiotactic 1,2-polybutadiene can also be increased by synthesizing the polymer with the catalyst composition of this invention wherein the α-acylphosphonate diester employed contains sterically hindered organic groups in lieu of sterically less hindered organic groups. Examples of sterically hindered organic groups include isopropyl, isobutyl, t-butyl, neopentyl, 2-ethylhexyl, cyclohexyl, 1-methylcyclopentyl, and 2,6-dimethylphenyl groups.

Examples of sterically less hindered organic groups include methyl, fluoromethyl, ethyl, n-propyl, n-butyl, n-pentyl, n-hexyl, and n-octyl groups.

In a preferred embodiment of this invention, syndiotactic 1,2-polybutadiene having a melting temperature from 110°C to 210°C can be prepared. More preferably, syndiotactic 1,2-polybutadiene having a melting temperature from 120°C to 200°C can be prepared, and even more preferably, syndiotactic 1,2-polybutadiene having a melting temperature from 130°C to 190°C can be prepared. The 1,2-linkage content of the syndiotactic 1,2-polybutadiene is preferably from 60% to 99%, and more preferably from 70% to 95%. The syndiotacticity of the syndiotactic 1,2-polybutadiene is preferably from 60% to 99%, more preferably from 70% to 95%, and even more preferably from 75% to 90%, where the percentage is determined based on the racemic triad of the vinyl groups, excluding the vinyl groups adjacent to a monomer unit having a 1,4-configuration.

The syndiotactic 1,2-polybutadiene produced with the catalyst composition of this invention has many uses. It can be blended into and concurred with various natural or synthetic rubbers in order to improve the properties thereof. For example, it can be incorporated into elastomers in order to improve the green strength of those elastomers, particularly in tires. The supporting or reinforcing carcass of tires is particularly prone to distortion during tire building and curing procedures. For this reason, the incorporation of the syndiotactic 1,2-polybutadiene into rubber compositions that are utilized in the supporting carcass of tires has particular utility in preventing or minimizing this distortion. In addition, the incorporation of the syndiotactic 1,2-polybutadiene into tire tread compositions can reduce the heat build-up and improve the tear and wear resistance of tire treads. The syndiotactic 1,2-polybutadiene is also useful in the manufacture of films and packaging materials and in many molding applications.

In order to demonstrate the practice of the present invention, the following examples have been prepared and tested. The examples should not, however, be viewed as limiting the scope of the invention. The claims will serve to define the invention.

### Examples

### EXAMPLE 1

Diethyl acetylphosphonate (formula: CH₃C(O)P(O)(OEt)₂) was synthesized by reacting acetyl chloride (CH₃COCl) with triethyl phosphite (P(OEt)₃). To triethyl phosphite (109.0 g, 0.655 mol), stirred in a 250-mL roundbottom flask under argon, was added dropwise acetyl chloride (51.4 g, 0.655 mol) over a period of about 30 minutes while the reaction mixture was cooled with an ice-bath. The mixture was stirred at room temperature for 1 hour and then heated at 70°C for 1 hour. The reaction flask was then connected to a distillation head and a receiving flask. The ethyl chloride formed in the reaction was removed by distillation at atmospheric pressure. The remaining crude product was purified by vacuum distillation at 65-70°C and a pressure of 133,3 Pa (1 torr), yielding diethyl acetylphosphonate as a colorless liquid (86.6 g, 73% yield). The proper identity of the product was established by nuclear magnetic resonance (NMR) and infrared (IR) spectroscopic analyses. ¹H NMR data (CDCl₃, 25°C, referenced to tetramethylsilane): δ 4.20 (multiplet, 4 H, OC*H*₂), 2.47 (doublet, ³J_{HP} = 5.2 Hz, 3H, C*H*₃CO), 1.36 (triplet, ³J_{HH} = 7.1 Hz, 6 H, CH₂C*H*₃). ¹³P NMR data (CDCl₃, 25°C, referenced to 85% H₃PO₄): δ -3.22. IR data (neat liquid film): ν(C=O) 1700 cm⁻¹, ν(P=O) 1255 cm⁻¹, v(P-O) 1020 cm⁻¹.

### Example 2

An oven-dried 1-liter glass bottle was capped with a self-sealing rubber liner and a perforated metal cap. After the bottle was thoroughly purged with a stream of dry nitrogen gas, the bottle was charged with 105 g of hexanes and 228 g of a 1,3-butadiene/hexanes blend containing 21.9% by weight of 1,3-butadiene. The following catalyst ingredients were then added to the bottle in the following order: (1) 0.05 mmol of iron(II) 2-ethylhexanoate, (2) 0.20 mmol of diethyl acetylphosphonate, and (3) 0.65 mmol of tri-n-butylaluminum. The bottle was tumbled for 7 hours in a water bath maintained at 65°C. The polymerization mixture was coagulated with 3 liters of isopropanol containing 2,6-di-*tert*-butyl-4-methylphenol as the antioxidant. The resulting syndiotactic 1,2-polybutadiene was isolated by filtration and dried to a constant weight under vacuum at 60°C. The yield of the polymer was 47.6 g (95% yield). As measured by differential scanning calorimetry (DSC), the polymer had a melting temperature of 125°C. The ¹H and ¹³C nuclear magnetic resonance (NMR) spectroscopic analyses of the polymer indicated a 1,2-linkage content of 85.2% and a syndiotacticity of 75.9%. The monomer charge, the amounts of the catalyst ingredients, and the properties of the resulting syndiotactic 1,2-polybutadiene are summarized in Table I.

**TABLE I**

| **Example No.** | **2** | **3** | **4** |
|---|---|---|---|
| Hexanes (g) | 105 | 105 | 105 |
| 21.9% 1,3-Bd/hexanes (g) | 228 | 228 | 228 |
| Fe(2-EHA)₂ (mmol) | 0.050 | 0.050 | 0.050 |
| CH₃C(O)P(O)(OEt)₂ (mmol) | 0.20 | 0.20 | 0.20 |
| *n*-Bu₃Al (mmol) | 0.65 | 0.70 | 0.75 |
| Fe/P/A1 molar ratio | 1:4:13 | 1:4:14 | 1:4:15 |
| Polymer yield after 7 hr at 65°C (%) | 94 | 96 | 95 |
| Melting temperature (°C) | 125 | 125 | 126 |

### EXAMPLES 3 AND 4

In Examples 3 and 4, the procedure described in Example 2 was repeated except that the catalyst ingredient ratio was varied as shown in Table I. The monomer charge, the amounts of the catalyst ingredients, and the properties of the resulting syndiotactic 1,2-polybutadiene are summarized in Table I.

### Examples 5-7

In Examples 5-7, the procedure described in Example 2 was repeated except that triisobutylaluminum was substituted for tri-*n*-butylaluminum, and the catalyst ingredient ratio was varied as shown in Table II. The monomer charge, the amounts of the catalyst ingredients, and the properties of the resulting syndiotactic 1,2-polybutadiene are summarized in Table II. The ¹H and ¹³C NMR spectroscopic analyses of the polymer produced in Example 5 indicated a 1,2-linkage content of 89.7% and a syndiotacticity of 88.5%.

**TABLE II**

| **Example No.** | **5** | **6** | **7** |
|---|---|---|---|
| Hexanes (g) | 105 | 105 | 105 |
| 21.9% 1,3-Bd/hexanes (g) | 228 | 228 | 228 |
| Fe(2-EHA)₂ (mmol) | 0.050 | 0.050 | 0.050 |
| CH₃C(O)P(O) (OEt)₂ (mmol) | 0.20 | 0.20 | 0.20 |
| *i*-Bu₃Al (mmol) | 0.45 | 0.50 | 0.55 |
| Fe/P/A1 molar ratio | 1:4:9 | 1:4:10 | 1:4:11 |
| Polymer yield after 7 hr at 65°C (%) | 83 | 82 | 82 |
| Melting temperature (°C) | 175 | 176 | 175 |

### EXAMPLE 8-10

In Examples 8-10, the procedure described in Example 2 was repeated except that iron(III) 2-ethylhexanoate was substituted for iron(II) 2-ethylhexanoate, and the catalyst ingredient ratio was varied as shown in Table III. The monomer charge, the amounts of the catalyst ingredients, and the properties of the resulting syndiotactic 1,2-polybutadiene are summarized in Table III.

**TABLE III**

| **Example No.** | **8** | **9** | **10** |
|---|---|---|---|
| Hexanes (g) | 105 | 105 | 105 |
| 21.9% 1,3-Bd/hexanes (g) | 228 | 228 | 228 |
| Fe(2-EHA)₃ (mmol) | 0.050 | 0.050 | 0.050 |
| CH₃C(O)P(O)(OEt)₂ (mmol) | 0.20 | 0.20 | 0.20 |
| *n*-Bu₃Al (mmol) | 0.65 | 0.70 | 0.75 |
| Fe/P/Al molar ratio | 1:4:13 | 1:4:14 | 1:4:15 |
| Polymer yield after 7 hr at 65°C (%) | 95 | 94 | 92 |
| Melting temperature (°C) | 125 | 126 | 125 |

### EXAMPLES 11-13

In Examples 11-13, the procedure described in Example 2 was repeated except that iron(III) 2-ethylhexanoate was substituted for iron(II) 2-ethylhexanoate, triisobutylaluminum was substituted for tri-*n*-butylaluminum, and the catalyst ingredient ratio was varied as shown in Table N. The monomer charge, the amounts of the catalyst ingredients, and the properties of the resulting syndiotactic 1,2-polybutadiene are summarized in Table N.

**TABLE IV**

| **Example No.** | **11** | **12** | **13** |
|---|---|---|---|
| Hexanes (g) | 105 | 105 | 105 |
| 21.9% 1,3-Bd/hexanes (g) | 228 | 228 | 228 |
| Fe(2-EHA)₃ (mmol) | 0.050 | 0.050 | 0.050 |
| CH₃C(O)P(O)(OEt)₂ (mmol) | 0.20 | 0.20 | 0.20 |
| *i*-Bu₃Al (mmol) | 0.45 | 0.59 | 0.55 |
| Fe/P/Al molar ratio | 1:4:9 | 1:4:10 | 1:4:11 |
| Polymer yield after 7 hr at 65°C (%) | 82% | 83% | 83% |
| Melting temperature (°C) | 175 | 175 | 177 |

### EXAMPLES 14

An oven-dried 1-liter glass bottle was capped with a self-sealing rubber liner and a perforated metal cap. After the bottle was thoroughly purged with a stream of dry nitrogen gas, the bottle was charged with 106 g of hexanes and 227 g of a 1,3-butadiene/hexanes blend containing 22.0% by weight of 1,3-butadiene. The following catalyst ingredients were then added to the bottle in the following order: (1) 0.075 mmol of iron(III) 2-ethylhexanoate, (2) 0.30 mmol of diethyl acetylphosphonate, and (3) 0.90 mmol of tri-n-butylaluminum. The bottle was tumbled for 7 hours in a water bath maintained at 65°C. The polymerization mixture was coagulated with 3 liters of isopropanol containing 2,6-di-tert-butyl-4-methylphenol as the antioxidant. The resulting syndiotactic 1,2-polybutadiene was isolated by filtration and dried to a constant weight under vacuum at 60°C. The yield of the polymer was 49.4 g (99% yield). As measured by differential scanning calorimetry (DSC), the polymer had a melting temperature of 124°C. The ¹H and ¹³C nuclear magnetic resonance (NMR) spectroscopic analyses of the polymer indicated a 1,2-linkage content of 85.2% and a syndiotacticity of 75.9%. As determined by gel permeation chromatography (GPC), the polymer had a number average molecular weight (Mₙ) of 170,000, a weight average molecular weight (M_{w}) of 375,000, and a polydispersity index (M_{w}/Mₙ) of 2.2.

### EXAMPLES 15-18

In Examples 15-18, the procedure described in Example 14 was repeated except that triisobutylaluminum/tri-n-butylaluminum mixtures having various molar ratios, i.e., 25:75, 50:50, 75:25, and 100:0, were substituted for the tri-n-butylaluminum. The monomer charge, the amounts of the catalyst ingredients, the polymer yields, and the properties of the resulting syndiotactic 1,2-polybutadiene are summarized in Table V.

**TABLE V**

| **Example No.** | **14** | **15** | **16** | **17** | **18** |
|---|---|---|---|---|---|
| hexanes (g) | 106 | 106 | 106 | 106 | 106 |
| 22.0% 1,3-Bd/hexanes (g) | 227 | 227 | 227 | 227 | 227 |
| Fe(2-EHA)₃ (mmol) | 0.075 | 0.075 | 0.075 | 0.075 | 0.075 |
| CH₃C(O)P(O) (OEt)₂ (mmol) | 0.30 | 0.30 | 0.30 | 0.30 | 0.30 |
| *i*-Bu₃Al/*n*-Bu₃Al molar ratio | 0:100 | 25:75 | 50:50 | 75:25 | 100:0 |
| Total AlR₃ (mmol) | 0.90 | 0.90 | 0.90 | 0.90 | 0.90 |
| Fe/P/A1 molar ratio | 1:4:12 | 1:4:12 | 1:4:12 | 1:4:12 | 1:4:12 |
| Polymer yield after 7 hr at 65°C (%) | 99% | 98% | 97% | 95% | 94% |
| Melting temperature (C) | 124 | 134 | 151 | 168 | 176 |
| Mₙ | 170,000 | 201,000 | 257,000 | 297,000 | 383,000 |
| M_{w} | 375,000 | 482,000 | 592,000 | 745,000 | 911,000 |
| M_{w}/Mₙ | 2.2 | 2.4 | 2.3 | 2.5 | 2.4 |
| 1,2-Linkage content (%) | 85.2 | 85.8 | 87.0 | 88.7 | 89.7 |
| Syndiotacticity (%) | 75.9 | 79.3 | 81.8 | 86.6 | 88.5 |

As shown in Table V, the melting temperature, molecular weight, 1,2-linkage content, and syndiotacticity of the syndiotactic 1,2-polybutadiene can be increased by increasing the molar ratio of triisobutylaluminum (sterically hindered) to tri-n-butylaluminum (sterically non-hindered).

### EXAMPLE 19

Inside a glovebox operated under an argon atmosphere, an oven-dried 2.07 ml (7-oz.) glass bottle was charged with 139 mg (1.10 mmol) of anhydrous iron(II) chloride powder and 792 mg (4.40 mmol) of diethyl acetylphosphonate. The bottle was capped with a self-sealing rubber liner and a perforated metal cap, and then the bottle was removed from the glovebox. Toluene (19.1 mL) was charged into the bottle. The bottle was tumbled for 1.5 hours in a water bath maintained at 80°C, resulting in the dissolution of the iron(II) chloride solid and the formation of a pale-yellow solution containing the complex of iron(II) chloride with diethyl acetylphosphonate ligand. The concentration of the iron-ligand complex in the solution was calculated to be 0.055 mmol per mL.

### EXAMPLE 20

Inside a glovebox operated under an argon atmosphere, an oven-dried 7-oz. glass bottle was charged with 178 mg (1.10 mmol) of anhydrous iron(III) chloride powder and 792 mg (4.40 mmol) of diethyl acetylphosphonate. The bottle was capped with a self-sealing rubber liner and a perforated metal cap, and then the bottle was removed from the glovebox. Toluene (19.1 mL) was charged into the bottle. The bottle was shaken at room temperature for 30 minutes, resulting in the dissolution of the iron(III) chloride solid and the formation of a yellow solution containing the complex of iron(III) chloride with diethyl acetylphosphonate ligand. The concentration of the iron-ligand complex in the solution was calculated to be 0.055 mmol per mL.

### EXAMPLE 21

An oven-dried 1-liter glass bottle was capped with a self-sealing rubber liner and a perforated metal cap. After the bottle was thoroughly purged with a stream of dry nitrogen, the bottle was charged with 228 g of a 1,3-butadiene/hexanes blend containing 21.9% of 1,3-butadiene, followed by 0.60 mmol of triisobutylaluminum and 0.050 mmol of the complex of iron(II) chloride with diethyl acetylphosphonate ligand as prepared in Example 19. The bottle was placed in a room-temperature water bath. After 6 hours, the oligomerization was terminated by addition of 0.30 mL of isopropanol. The analysis of the resulting oligomerization mixture by gas chromatography/mass spectrometry (GC/MS) indicated that 99.5% of the 1,3-butadiene monomer used had been converted, the product being a mixture of 5-methyl-1,3,6-heptatriene (79.2%), 1,3,6-octariene (12.2%), and trimers (8.6%). The experimental data are summarized in Table VI.

**TABLE VI**

| **Example No.** | **21** | **22** | **23** |
|---|---|---|---|
| 21.9% 1,3-Bd/hexanes (g) | 228 | 228 | 228 |
| *i*-Bu₃Al (mmol) | 0.60 | 0.65 | 0.70 |
| FeCl₂{CH₃C(O)P(O)(OEt)₂}₄ (mmol) | 0.050 | 0.050 | 0.050 |
| Fe/P/Al molar ratio | 1:4:12 | 1:4:13 | 1:4:14 |
| Conversion (%) after 6 hr at 25°C | 99.5 | 99.5 | 99.3 |
| Oligomerization product composition: | | | |
| 5-Methyl-1,3,6-heptatriene (%) | 79.2 | 80.0 | 79.3 |
| 1,3,6-Octatriene (%) | 12.2 | 11.2 | 11.4 |
| Trimers | 8.6 | 8.8 | 9.4 |

### EXAMPLES 22 AND 23

In Examples 22 and 23, the procedure in Example 21 was repeated except that the catalyst ingredient ratio was varied as shown in Table VI. The monomer charge, the amounts of the catalyst ingredients, and the oligomerization product composition are summarized in Table VI.

### EXAMPLES 24-26

In Examples 24-26, the procedure in Example 21 was repeated except that the complex of iron(III) chloride with diethyl acetylphosphonate ligand as prepared in Example 20 was substituted for the complex of iron(II) chloride with diethyl acetylphosphonate ligand, and the oligomerization was conducted at 50°C. The monomer charge, the amounts of the catalyst ingredients, and the oligomerization product composition are summarized in Table VII.

**TABLE VII**

| **Example No.** | **24** | **25** | **26** |
|---|---|---|---|
| 21.9% 1,3-Bd/hexanes (g) | 228 | 228 | 228 |
| *i*-Bu₃Al (mmol) | 0.65 | 0.70 | 0.75 |
| FeCl₃{CH₃C(O)P(O)(OEt)₂}₄ (mmol) | 0.050 | 0.050 | 0.050 |
| Fe/P/Al molar ratio | 1:4:13 | 1:4:14 | 1:4:15 |
| Conversion (%) after 6 hr at 50 °C | 98.4 | 98.2 | 98.4 |
| Oligomerization product composition: | | | |
| 5-Methyl-1,3,6-heptatriene (%) | 78.1 | 78.4 | 78.2 |
| 1,3,6-Octatriene (%) | 13.0 | 12.8 | 12.9 |
| Trimers | 8.9 | 8.8 | 8.9 |

### EXAMPLE 27

An oven-dried 1-liter glass bottle was capped with a self-sealing rubber liner and a perforated metal cap. After the bottle was thoroughly purged with a stream of dry nitrogen, the bottle was charged with 228 g of a 1,3-butadiene/hexanes blend containing 21.9% by weight of 1,3-butadiene. The following catalyst ingredients were then charged into the bottle in the following order: (1) 0.050 mmol of iron(III) 2-ethylhexanoate, (2) 0.20 mmol of diethyl acetylphosphonate, (3) 0.15 mmol of diisobutylaluminum chloride, and (4) 0.50 mmol of triisobutylaluminum. The bottle was placed in a room-temperature water bath. After 3 hours, the oligomerization was terminated by addition of 0.30 mL of isopropanol. The analysis of the resulting oligomerization mixture by gas chromatography/mass spectrometry (GC/MS) indicated that 99.5% of the 1,3-butadiene monomer used had been converted, the product being a mixture of 5-methyl-1,3,6-heptatriene (79.5%), 1,3,6-octariene (12.5%), and trimers (8.0%). The experimental data are summarized in Table VIII.

**TABLE VIII**

| **Example No.** | **27** | **28** | **29** |
|---|---|---|---|
| 21.9% 1,3-Bd/hexanes (g) | 228 | 228 | 228 |
| Fe(2-EHA)₃ (mmol) | 0.050 | 0.050 | 0.050 |
| CH₃C(O)P(O)(OEt)₂ (mmol) | 0.20 | 0.20 | 0.20 |
| *i*-Bu₂AlCl (mmol) | 0.15 | 0.15 | 0.15 |
| *i*-Bu₃Al (mmol) | 0.50 | 0.55 | 0.60 |
| Fe/P/Cl/Al molar ratio | 1:4:3:10 | 1:4:3:11 | 1:4:3:12 |
| Conversion (%) after 3 hr at 25°C | 98.9 | 99.6 | 99.9 |
| Oligomerization product composition: | | | |
| 5-Methyl-1,3,6-heptatriene (%) | 79.5 | 79.5 | 79.0 |
| 1,3,6-Octatriene (%) | 12.5 | 12.6 | 12.6 |
| Trimers (%) | 8.0 | 7.9 | 8.4 |

### EXAMPLES 29 AND 29

In Examples 28 and 29, the procedure in Example 27 was repeated except that the catalyst ingredient ratio was varied as shown in Table VIII. The monomer charge, the amounts of the catalyst ingredients, and the oligomerization product composition are summarized in Table VIII.

The results described in Examples 21-29 show that, at mild temperature conditions, 1,3-butadiene can be converted substantially quantitatively to the two acyclic dimers as the main products.

Various modifications and alterations that do not depart from the scope and spirit of this invention will become apparent to those skilled in the art. This invention is not to be duly limited to the illustrative embodiments set forth herein.

## Claims

1. A catalyst composition that is the combination of or the reaction product of ingredients comprising:
(a) an iron-containing compound;
(b) an α-acylphosphonate diester; and
(c) an organoaluminum compound.

2. A process for forming conjugated diene polymers comprising the step of:
polymerizing conjugated diene monomers in the presence of a catalytically effective amount of a catalyst composition formed by combining:
(a) an iron-containing compound;
(b) an α-acylphosphonate diester; and
(c) an organoaluminum compound.

3. The catalyst composition of claim 1 or the process of claim 2, where said α-acylphosphonate diester is an acyclic α-acylphosphonate diester defined by the following structure: 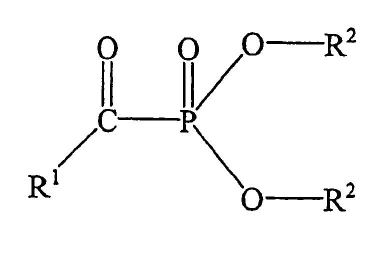 where R¹ is a hydrogen atom or a mono-valent organic group, and where each R², which may be the same or different, is a mono-valent organic group, or where said α-acylphosphonate diester is α-acylphosphonate diester is a cyclic α-acylphosphonate diester that is defined by the following structure: 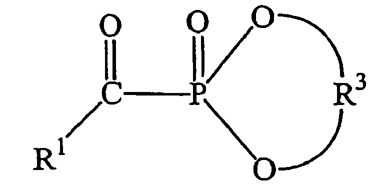 where R¹ is a hydrogen atom or a mono-valent organic group and R³ is a divalent organic group.

4. The catalyst composition of claim 1 or the process of claim 2, where said cyclic α-acylphosphonate diester is a hydrocarbylene formylphosphonate, hydrocarbylene acetylphosphonate, hydrocarbylene propionylphosphonate, hydrocarbylene butyrylphosphonate, hydrocarbylene isobutyrylphosphonate, hydrocarbylene pivaloylphosphonate, hydrocarbylene 2-ethylhexanoylphosphonate, hydrocarbylene cyclohexanoylphosphonate, hydrocarbylene acryloylphosphonate, hydrocarbylene methacryloylphosphonate, hydrocarbylene crotonylphosphonate, hydrocarbylene benzoylphosphonate, hydrocarbylene toluoylphosphonate, hydrocarbylene anisoylphosphonate, or hydrocarbylene naphthoylphosphonate.

5. The catalyst composition of claim 1 or the process of claim 2, where the molar ratio of said organoaluminum compound to said iron-containing compound is from 1:1 to 200:1, and the molar ratio of said α-acylphosphonate diester to said iron-containing compound is from 0.5:1 to 50:1.

6. The process of claim 2, where said conjugated diene monomers consist essentially of 1,3-butadiene, thereby forming syndiotactic 1,2-polybutadiene; and where said catalytically effective amount includes from 0.01 to 2 mmol per 100 g of monomer.

7. The catalyst composition of claim 1 or the process of claim 2, where said organoaluminum compounds includes a blend of two or more sterically distinct organoaluminum compounds, where said blend of two or more sterically distinct organoaluminum compounds includes at least one sterically hindered organoaluminum compound and at least one sterically non-hindered organoaluminum compound.

8. The catalyst composition or process of claim 7, where the at least one sterically hindered organoaluminum compound is triisopropylaluminum, triisobutylaluminum, tri-t-butylaluminum, trineopentylaluminum, tricyclohexylaluminum, tris(1-methylcyclopentyl)aluminum, tris(1-adamantyl)aluminum, tris(2-adamantyl)aluminum, tris(2,6-dimethylphenyl) aluminum, trimesitylaluminum, isopropylaluminoxane, isobutylaluminoxane, t-butylaluminoxane, neopentylaluminoxane, cyclohexylaluminoxane, 1-methylcyclopentylaluminoxane, 2,6-dimethylphenylaluminoxane, or mixtures thereof, and where the at least one sterically non-hindered organoaluminum compound is trimethylaluminum, triethylaluminum, tri-n-propylaluminum, tri-n-butylaluminum, tri-n-hexylaluminum, tri-n-octylaluminum, methylaluminoxane, ethylaluminoxane, n-propylaluminoxane, n-butylaluminoxane, n-hexylaluminoxane, n-octylaluminoxane, or mixtures thereof.

9. The process of claim 2, where the iron-containing compound is a halogen-containing iron compound or where a halogen-containing compound is employed in conjunction with iron-containing compound, and where said catalyst composition forms oligomers.

## Patentansprüche

1. Katalysatorzusammensetzung, die die Kombination oder das Reaktionsprodukt von Bestandteilen ist, umfassend:
(a) eine eisenhaltige Verbindung;
(b) einen α-Acylphosphonatdiester und
(c) eine Organoaluminiumverbindung.

2. Verfahren zur Bildung von konjugierten Dienpolymeren, umfassend die Stufe des:
Polymerisierens von konjugierten Dienmonomeren in Gegenwart einer katalytisch wirksamen Menge einer Katalysatorzusammensetzung, gebildet durch Kombinieren von:
(a) einer eisenhaltigen Verbindung;
(b) einem α-Acylphosphonatdiester und
(c) einer Organoaluminiumverbindung.

3. Katalysatorzusammensetzung nach Anspruch 1 oder Verfahren nach Anspruch 2, wobei der α-Acylphosphonatdiester ein acyclischer α-Acylphosphonatdiester ist, definiert durch die folgende Struktur: 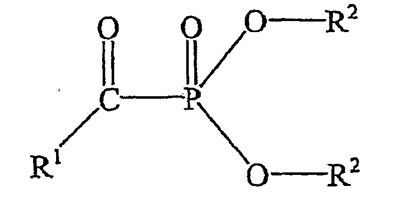 worin R¹ ein Wasserstoffatom oder eine monovalente organische Gruppe ist und worin R², die gleich oder verschieden sein können, jeweils eine monovalente organische Gruppe ist, oder wobei der α-Acylphosphonatdiester ein cyclischer α-Acylphosphonatdiester ist, der durch die folgende Struktur definiert ist: 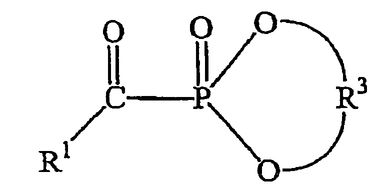 worin R¹ ein Wasserstoffatom oder eine monovalente organische Gruppe ist und R³ eine divalente organische Gruppe ist.

4. Katalysatorzusammensetzung nach Anspruch 1 oder Verfahren nach Anspruch 2, wobei der cyclische α-Acylphosphonatdiester ein Hydrocarbylenformylphosphonat, Hydrocarbylenacetylphosphonat, Hydrocarbylenpropionylphosphonat, Hydrocarbylenbutyrylphosphonat, Hydrocarbylenisobutyrylphosphonat, Hydrocarbylenpivaloylphosphonat, Hydrocarbylen-2-ethylhexanoylphosphonat, Hydrocarbylencyclohexanoylphosphonat, Hydrocarbylenacryloylphosphonat, Hydrocarbylenmethacryloylphosphonat, Hydrocarbylencrotonylphosphonat, Hydrocarbylenbenzoylphosphonat, Hydrocarbylentoluoylphosphonat, Hydrocarbylenanisoylphosphonat oder Hydrocarbylennaphthoylphosphonat ist.

5. Katalysatorzusammensetzung nach Anspruch 1 oder Verfahren nach Anspruch 2, wobei das molare Verhältnis der Organoaluminiumverbindung zu der eisenhaltigen Verbindung von 1:1 bis 200:1 beträgt und das molare Verhältnis des α-Acylphosphonatdiesters zu der eisenhaltigen Verbindung von 0,5:1 bis 50:1 beträgt.

6. Verfahren nach Anspruch 2, wobei die konjugierten Dienmonomere im Wesentlichen aus 1,3-Butadien bestehen, wodurch syndiotaktisches 1,2-Polybutadien gebildet wird, und wobei die katalytisch wirksame Menge von 0,01 bis 2 mmol pro 100 g an Monomer umfasst.

7. Katalysatorzusammensetzung nach Anspruch 1 oder Verfahren nach Anspruch 2, wobei die Organoaluminiumverbindung ein Gemisch von zwei oder mehr sterisch verschiedenen Organoaluminiumverbindungen umfasst, wobei das Gemisch von zwei oder mehr sterisch verschiedenen Organoaluminiumverbindungen wenigstens eine sterisch gehinderte Organoaluminiumverbindung und wenigstens eine sterisch nicht gehinderte Organoaluminiumverbindung umfasst.

8. Katalysatorzusammensetzung oder Verfahren nach Anspruch 7, wobei die wenigstens eine sterisch gehinderte Organoaluminiumverbindung Triisopropylaluminium, Triisobutylaluminium, Tri-tert.-Butylaluminium, Trineopentylaluminium, Tricyclohexylaluminium, Tris(1-methylcyclopentyl)aluminium, Tris(1-adamantyl)aluminium, Tris(2-adamantyl)aluminium, Tris(2,6-dimethylphenyl)aluminium, Trimesitylaluminium, Isopropylaluminoxan, Isobutylaluminoxan, tert.-Butylaluminoxan, Neopentylaluminoxan, Cyclohexylaluminoxan, 1-Methylcyclopentylaluminoxan, 2,6-Dimethylphenylaluminoxan oder Gemische davon ist und wobei die wenigstens eine sterisch nicht gehinderte Organoaluminiumverbindung Trimethylaluminium, Triethylaluminium, Tri-n-propylaluminium, Tri-n-butylaluminium, Tri-n-hexylaluminium, Tri-n-octylaluminium, Methylaluminoxan, Ethylaluminoxan, n-Propylaluminoxan, n-Butylaluminoxan, n-Hexylaluminoxan, n-Octylaluminoxan oder Gemische davon ist.

9. Verfahren nach Anspruch 2, wobei die eisenhaltige Verbindung eine halogenhaltige Eisenverbindung ist oder wobei eine halogenhaltige Verbindung in Verbindung mit einer eisenhaltigen Verbindung eingesetzt wird und wobei die Katalysatorzusammensetzung Oligomere bildet.

## Revendications

1. Composition de catalyseur qui est la combinaison ou le produit réactionnel d'ingrédients comprenant:
(a) un composé contenant du fer;
(b) un diester α-acylphosphonate ; et
(c) un composé d'organoaluminium.

2. Procédé pour former des polymères de diènes conjugués, comprenant les étapes consistant à:
polymériser des monomères de diènes conjugués en présence d'une quantité catalytiquement efficace d'une composition de catalyseur formée en combinant:
(a) un composé contenant du fer;
(b) un diester α-acylphosphonate ; et
(c) un composé d'organoaluminium.

3. Composition de catalyseur selon la revendication 1 ou procédé selon la revendication 2, où ledit diester α-acylphosphonate est un diester α-acylphosphonate acyclique défini par la structure suivante: 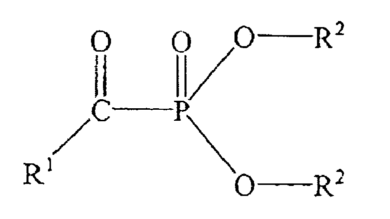 dans laquelle R¹ est un atome d'hydrogène ou un groupe organique monovalent, et dans laquelle chacun des R², qui peuvent être identiques ou différents, est un groupe organique monovalent, ou dans laquelle ledit diester α-acylphosphonate est un diester α-acylphosphonate cyclique qui est défini par la structure suivante: 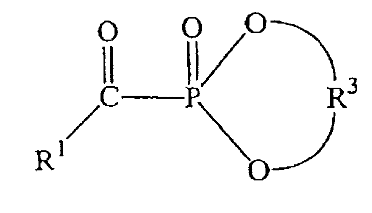 où R¹ est un atome d'hydrogène ou un groupe organique monovalent et R³ est un groupe organique divalent.

4. Composition de catalyseur selon la revendication 1 ou procédé selon la revendication 2, où ledit diester α-acylphosphonate cyclique est un formylphosphonate d'hydrocarbylène, acélylphosphonate d'hydrocarbylène, propionylphosphonate d'hydrocarbylène, butyrylphosphonate d'hydrocarbylène, isobutyrylphosphonate d'hydrocarbylène, pivaloylphosphonate d'hydrocarbylène, 2-éthylhexanoylphosphonate d'hydrocarbylène, cyclohexanoylphosphonate d'hydrocarbylène, acryloylphosphonate d'hydrocarbylène, méthacryloylphosphonate d'hydrocarbylène, crotonylphosphonate d'hydrocarbylène, benzoylphosphonate d'hydrocarbylène, toluoylphosphonate d'hydrocarbylène, anisoylphosphonale d'hydrocarbylène, ou naphtoylphosphonate d'hydrocarbylène.

5. Composition de catalyseur selon la revendication 1 ou procédé selon la revendication 2, où le rapport molaire dudit composé d'organoaluminium audit composé contenant du fer est de 1:1 à 200:1, et le rapport molaire dudit diester α-acylphosphonate audit composé contenant du fer est de 0.5:1 à 50:1.

6. Procédé selon la revendication 2, où lesdits monomères de diènes conjugués sont constitués essentiellement de 1,3-butadiène, formant ainsi un 1,2-polybutadiène syndiotactique; et où ladite quantité catalytiquement efficace comprend de 0,01 à 2 mmol pour 100 g de monomère.

7. Composition de catalyseur selon la revendication 1 ou procédé selon la revendication 2, où lesdits composés d'organoaluminium incluent un mélange de deux composés d'organoaluminium stériquement distincts ou plus, où ledit mélange de deux composés d'organoaluminium stériquement distincts ou plus inclut an moins un composé d'organoaluminium à encombrement stérique et au moins un composé d'organoaluminium stériquement non encombré.

8. Composition de catalyseur ou procédé selon la revendication 7, où ledit au moins un composé d'organoaluminium à encombrement stérique est le triisopropylaluminium, le triisobutylaluminium, le tri-t-butylaluminium, le trinéopentylaluminium, le tricyclohexylaluminium, le tris(1-méthylcyclopentyl)aluminium, le tris(1-adamantyl)aluminium, le tris(2-adamantyl)aluminium, le tris(2,6-diméthylphényl)aluminium, le trimésitylaluminium, l'isopropylaluminoxane, l'isobutylaluminoxane, le t-butylaluminoxane, le néopentylalumininoxane, le cyclohexylaluminoxane, le 1-méthylcyclopentylaluminoxane, le 2,6-diméthylphénylaluminoxane, ou leurs mélanges, et où ledit au moins un composé d'organoaluminium non encombré stériquement est le triméthylaluminium, le triéthylaluminium, le tri-n-propylaluminium, le tri-n-butylaluminium, le tri-n-hexylaluminium, le tri-n-octylaluminium, le méthylaluminoxane, l'éthylaluminoxane, le n-propylaluminoxane, le n-butylaluminoxane, le n-hexylaluminoxane, le n-octylaluminoxane, ou leurs mélanges.

9. Procédé selon la revendication 2, dans lequel le composé contenant du fer est un composé de fer halogéné ou dans lequel un composé halogéné est employé conjointement avec un composé contenant du fer, et dans lequel ladite composition de catalyseur forme des oligomères.
